(19) Europäisches Patentamt
European Patent Office
Office européen des brevets

(11) **EP 2 297 896 B1**

(12) **FASCICULE DE BREVET EUROPEEN**

(45) Date de publication et mention
de la délivrance du brevet:
**26.08.2015   Bulletin 2015/35**

(51) Int Cl.:
***H04L 9/08*** *(2006.01)*

(21) Numéro de dépôt: **09793954.0**

(22) Date de dépôt: **09.07.2009**

(86) Numéro de dépôt international:
**PCT/EP2009/058729**

(87) Numéro de publication internationale:
**WO 2010/003998 (14.01.2010 Gazette 2010/02)**

(54) **PROCEDE DE DISTRIBUTION QUANTIQUE DE CLES A VARIABLES CONTINUES**

VERFAHREN ZUR QUANTENVERTEILUNG VON SCHLÜSSELN MIT KONTINUIERLICHEN VARIABLEN

METHOD OF QUANTUM DISTRIBUTION OF KEYS WITH CONTINUOUS VARIABLES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **10.07.2008   FR 0803937**

(43) Date de publication de la demande:
**23.03.2011   Bulletin 2011/12**

(73) Titulaires:
• **Groupe des Ecoles de Télécommunications - Ecole Nationale Supérieure des Télécommunications
75634 Paris Cedex 13 (FR)**
• **Centre National de la Recherche Scientifique
75016 Paris (FR)**

(72) Inventeurs:
• **LEVERRIER, Anthony
08004 Barcelona (ES)**
• **GRANGIER, Philippe
F-78470 Saint Rémy Les Chevreuse (FR)**

(74) Mandataire: **Esselin, Sophie
Marks & Clerk France
Conseils en Propriété Industrielle
Immeuble Visium
22, Avenue Aristide Briand
94117 Arcueil Cedex (FR)**

(56) Documents cités:
**US-A1- 2006 083 376**

• **LEVERRIER A ET AL: "Multidimensional reconciliation for a continuous-variable quantum key distribution" PHYSICAL REVIEW A (ATOMIC, MOLECULAR, AND OPTICAL PHYSICS) AMERICAN PHYSICAL SOCIETY, USA, vol. 77, no. 4, 30 avril 2008 (2008-04-30), pages 042325/1-8, XP002519053 cité dans la demande**
• **VAN ASSCHE G ET AL: "Reconciliation of a quantum-distributed Gaussian key" IEEE TRANSACTIONS ON INFORMATION THEORY IEEE USA, vol. 50, no. 2, février 2004 (2004-02), pages 394-400, XP002519054 ISSN: 0018-9448 cité dans la demande**
• **DATABASE INSPEC [en ligne] THE INSTITUTION OF ELECTRICAL ENGINEERS, STEVENAGE, GB Inspec No. 10630659, 08 Mai 2009 LEVERRIER A ET AL: 'Unconditional security proof of long-distance continuous-variable quantum key distribution with discrete modulation' Database accession no. 10630659 & PHYSICAL REVIEW LETTERS AMERICAN PHYSICAL SOCIETY USA vol. 102, no. 18, page 180504 (4 PP.) DOI: 10.1103/PHYSREVLETT.102.180504 ISSN: 0031-9007**

**Description**

*DOMAINE DE L'INVENTION*

La présente invention concerne un procédé de distribution quantique de clés à variables continues.

Les procédés de distribution quantiques de clés permettent à deux parties éloignées, un émetteur et un récepteur usuellement appelés Alice et Bob, de s'échanger une clé secrète. Ces procédés comprennent une phase d'échange quantique entre Alice et Bob, comprenant l'envoi d'informations quantiques par Alice, sur un canal quantique, et leurs mesures par Bob, et à l'issue de laquelle Alice et Bob ont deux chaines de données corrélées. La phase d'échange est suivie d'une phase de traitement des données d'Alice et Bob pour en extraire une clé secrète. Cette phase de traitement comprend de manière habituelle :

- une étape dite d'estimation des paramètres de l'échange quantique, qui permet notamment de quantifier le nombre de bits d'information, appelée information mutuelle, qu'Alice et Bob ont en commun, et de borner la quantité d'information connue d'un espion Eve, pour estimer la taille de la clé secrète qu'il sera possible d'extraire;
- une étape dite de réconciliation des données corrélées d'Alice et Bob, basée sur un procédé de codage de correction d'erreur binaire pour corriger les erreurs de transmission. Soit c'est Bob qui corrige ses erreurs et on parle de réconciliation directe, soit c'est Alice, et on parle de réconciliation inverse. A l'issue de cette étape de réconciliation, Alice et Bob possèdent une chaine de bits strictement identique;
- une étape dite d'amplification de secret, destinée à éliminer l'information connue de l'espion Eve. A l'issue de cette étape Alice et Bob.ont une clé secrète en commun. Ils peuvent alors utiliser cette clé secrète dans des opérations de cryptographie.

L'intérêt croissant pour ces procédés réside dans la sécurité attachée à la distribution de la clé, dont la preuve repose sur les mécanismes de base de la mécanique quantique et de la théorie de l'information, notamment en ce qu'ils permettent de détecter et de borner la quantité d'information que pourrait détenir un espion Eve.

Mais le développement des procédés de distribution quantique de clés dans les systèmes de télécommunication, passe par l'amélioration de leur portée (la longueur du canal entre Alice et Bob), de leur débit (nombre de bits de clé par seconde), et du coût de leur mise en oeuvre.

*ETAT DE LA TECHNIQUE*

Dans les tout premiers procédés proposés, l'échange quantique était basé sur des variables quantiques discrètes, c'est-à-dire ne pouvant prendre qu'un nombre fini de valeurs, typiquement quatre, portées par un photon unique, telles que sa polarisation ou sa phase, mesurées au moyen d'un détecteur à comptage de photons. Les quatre valeurs différentes correspondent en réalité à 2 valeurs possibles, 0 ou 1, pour deux choix de bases possibles. Comme Bob fait un choix de base au moment de sa mesure, il peut différencier au maximum deux valeurs : Avec ces procédés, on est capable de transmettre au maximum 1 bit d'information binaire par photon transmis. L'efficacité de transmission repose alors essentiellement sur l'efficacité du détecteur à comptage de photons. Les difficultés rencontrées pour améliorer les performances de la détection par comptage de photons ont conduit à l'émergence d'autres procédés.

En particulier, de nouveaux procédés utilisent des variables quantiques continues, qui ont donc la propriété de pouvoir prendre une infinité de valeurs. Ces procédés dits QCV (*Quantum Continuous Variable*) suscitent beaucoup d'intérêt, en particulier parce que les variables quantiques continues peuvent être mesurées par détection interférométrique dite détection homodyne (voire hétérodyne), qui utilise des photodiodes usuelles, rapides et efficaces. Cette détection permet des mises en oeuvre facilitées et à moindre coût.

Des procédés à variables quantiques continues sont notamment décrits en détail dans les demandes de brevet EP1825633 et US2004/0109564, dans lesquelles les variables quantiques continues sont les composantes de quadrature d'états quantiques cohérents générés par une diode laser. Les observables (bases de mesure) sont les quadratures Q et P des états quantiques transmis.

Dans ces procédés, Alice applique une modulation continue aléatoire sur la phase et l'amplitude d'états cohérents, avant de les émettre vers le récepteur Bob, via un canal quantique C, par exemple, une fibre optique. Généralement, la modulation continue utilisée suit une même distribution gaussienne pour les deux quadratures.

La détection mise en oeuvre par Bob est une détection homodyne limitée au bruit de photon. Pour chaque état reçu, Bob choisit aléatoirement d'effectuer la mesure dans l'une ou l'autre des quadratures Q ou P. A la fin de l'échange, Bob annonce à Alice la base qu'il a retenue pour chaque mesure. Alice conserve uniquement la donnée correspondant à la quadrature choisie par Bob. Alice et Bob ont alors deux chaînes de données qui sont corrélées, qui sont utilisées dans les étapes suivantes du procédé de distribution quantique de clé.

L'utilisation d'une modulation gaussienne associée à une transmission sur un canal du type à bruit additif blanc gaussien, a pour avantage connu de maximiser l'information mutuelle $I_{AB}$, c'est-à-dire la quantité de bits d'information par signal quantique échangé, que partagent Alice et Bob, pour un rapport signal sur bruit SNR donné : l'information mutuelle $I_{AB}$ est égale à la limite maximale donnée par la formule de Shannon, encore appelée information de Shannon, pour un rapport SNR donné : $I_{AB} = \frac{1}{2}\log_2[1 + SNR]$.

Dans le contexte considéré, le rapport signal sur bruit SNR est en fait le rapport de la variance du signal émis à l'entrée du canal, égale à la variance $V_A$ de la distribution de probabilité gaussienne appliquée par Alice, sur la variance du bruit.

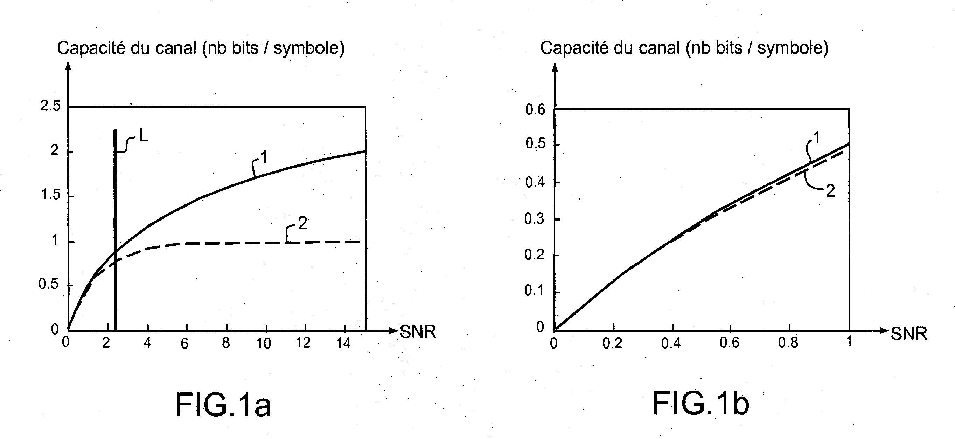

La courbe qui donne l'information mutuelle $I_{AB}$ en fonction du rapport signal à bruit SNR, ou courbe dite de Shannon est représentée sur la figure 1a, (courbe 1). Elle représente la capacité d'un canal (quantique) de transmission du type à bruit blanc additif gaussien (tel qu'une fibre optique par exemple), en fonction du rapport signal sur bruit. La capacité du canal est la quantité maximum de bits d'informations par symbole, c'est-à-dire par impulsion lumineuse, qu'il est théoriquement possible d'extraire pour un rapport signal à bruit donné. Elle montre qu'avec ce procédé, on peut avantageusement extraire plus d'un bit par symbole. Par exemple, pour un SNR de 15, on a $I_{AB}$=2 bits.

La théorie de Shannon ne propose cependant aucune méthode qui permettrait d'extraire ce nombre théorique de bits d'information. On définit un paramètre β, appelé efficacité de réconciliation, comme le rapport entre la taille de la chaîne de bits commune partagée par Alice et Bob à la fin de la réconciliation et l'information mutuelle égale à $\frac{1}{2}\log_2[1 + SNR]$ (limite de Shannon). Les meilleurs protocoles de réconciliation ont une efficacité de réconciliation β entre 0,85 et 0,90. Ces résultats sont obtenus en utilisant des codes correcteurs linéaires d'erreur binaire performants, tels que les codes à matrice de parité creuse, appelés codes LDPC (*"Low Density Parity Check"*) ou les turbo-codes, au prix d'une grande complexité de traitement. Dans les implémentations pratiques, ces codes ont notamment été associés à des techniques de traitement des données, tel que le découpage par tranches (décrit par exemple dans la publication Physical Review A76, 042305 (2007), Lodewyck et al, "Quantum key distribution over 25 km with an all-fiber continuous variables system") ou les octonions (décrit par exemple dans la publication Physical Review A 77, 042325 (2008), Leverrier et al, "Multidimensional reconciliation for a continuous-variable quantum key distribution").

En pratique, le débit de clé obtenu, est à un niveau bien inférieur de ce qui pourrait théoriquement être obtenu en ne considérant que les performances de la détection homodyne. Typiquement, avec les meilleurs codes, on atteint au mieux un débit de clé de l'ordre de 2 kilobits par seconde, pour une longueur de canal de l'ordre de 25 km. Au delà de cette distance, le rapport signal à bruit devient trop faible, et compromet la possibilité d'extraire une clé. On rappellera en effet que le rapport SNR étant fonction de la transmission T du canal quantique, il diminue comme la transmission T, suivant une fonction exponentielle décroissante avec la longueur du canal : A variance $V_A$ fixée, le rapport signal sur bruit SNR varie ainsi au premier ordre comme $V_A.T$. Par exemple, dans l'état de l'art des fibres optiques aux longueurs d'onde utilisées dans les systèmes de télécommunications (longueurs d'onde dites télécom, autour de 1550 nm), on a $T= 10^{-0.02d}$, où d est exprimée en kilomètres.

Ainsi la mise en oeuvre de ces protocoles à variables continues, nécessite de réaliser un compromis entre la complexité de réconciliation et le niveau du rapport signal sur bruit SNR, dans le but de maximiser à la fois l'information mutuelle, et le taux d'extraction, pour une longueur de canal donnée la plus grande possible. Notamment, ces protocoles se placent en condition de rapport signal à bruit SNR élevé. Un rapport signal à bruit élevé se traduit en pratique par une variance $V_A$ de modulation élevée, par exemple d'une dizaine à quelques dizaines de fois le bruit de photon ; le bruit étant lui connu ou déterminable dans un système de communication donné (en l'absence d'espion). Dans les demandes précitées, la variance $V_A$ de modulation est ainsi de l'ordre de 40. Voir notamment le tableau "TABLE 1" en page 9 de la demande US 2004/0109564 précitée. Dans la publication déjà citée supra de Lodewyck et al, c'est une variance $V_A$ de 18,5 (en unités de bruit de photon) pour une distance de 25 km (T=0,302) qui donne les meilleurs résultats.

Par contre, ces procédés offrent de bonnes preuves de sécurité, basées sur l'exploitation du modèle de canal gaussien. Ce modèle permet en effet de déterminer le nombre de bits d'information connus d'Eve de manière optimale, information utilisée dans la dernière phase d'amplification de secret, pour fournir en sortie la clé secrète, à partir de la séquence binaire obtenue en sortie de réconciliation.

Les équations de détermination de la quantité d'information détenue par Eve, établies pour le canal gaussien, sont bien connues et rappelées dans la publication précitée de Lodewyck et al.

Ainsi, si la sécurité de ces procédés QCV est bien établie, leurs performances sont en pratique limitées par les performances de la réconciliation. Les possibilités d'amélioration des procédés de réconciliation vont de pair avec une complexité croissante qui va à l'encontre du débit de distillation de clé.

D'autres procédés à variables continues ont été développés qui allient une modulation discrète de variables continues à une détection homodyne, dans l'optique de bénéficier de l'efficacité et la simplicité de mise en oeuvre de la détection homodyne, tout en se calquant pour le reste des étapes sur les procédés à variables discrètes. En effet, une différence importante entre les protocoles de distribution à variables discrètes et à variables continues, est le taux d'erreur de transmission qui est très faible dans le premier cas, ce qui autorise d'autres types d'algorithmes, moins complexes, pour la réconciliation, tels que les algorithmes dits "Cascade" ou "Winnow".

Ces procédés à variables continues et modulation discrète cherchent ainsi à bénéficier des meilleures performances en détection et en réconciliation. Ils utilisent donc des variables continues avec une modulation discrète, qui permet de ne coder au plus qu'un bit d'information binaire par information quantique émise, et qui permet une détection homodyne. Cette modulation discrète consiste pour Alice à envoyer un état cohérent choisi aléatoirement parmi un nombre fini d'états cohérents possibles. Ces états cohérents possibles sont caractérisés par une même amplitude, mais une phase différente. Pour chaque état cohérent reçu, Bob utilise la détection homodyne, pour mesurer une quadrature P ou Q, choisie aléatoirement.

Pour obtenir des taux d'erreur comparables à ceux des procédés à variables discrètes, un filtrage des données est effectué, pour éliminer les données les plus bruitées : c'est l'étape dite de seuillage ou de post-sélection, préalable à la réconciliation des données. Ainsi, les chaines de données corrélées d'Alice et Bob présentées à l'étape de réconciliation sont elles entachées de très peu d'erreurs.

Un tel procédé à modulation discrète de variables quantiques continues est décrit en détail dans la demande de brevet US 2006/0083376, avec différents modes de réalisation, avec notamment différentes valeurs du nombre d'états cohérents utilisés à l'émission. La figure 12 et le paragraphe associé [0149] dans la description montre l'opération de post-sélection, utilisant deux seuils X0 et -X0 de manière à diminuer de manière significative les erreurs de mesure, par discrimination.

Mais si ces procédés à modulation discrète offrent des perspectives en termes de portée et de débit de clé, une difficulté importante apparaît lors de la dernière étape d'amplification de secret : l'utilisation qui est faite de la postsélection ne permet pas d'utiliser les formules générales citées plus haut pour évaluer le nombre de bits connus par Eve (article Lodewyck et al, cf.supra), ce qui affecte significativement la sécurité du protocole.

Notamment, leur sécurité n'a été démontrée que face à des attaques spécifiques. Pour plus de détails, on pourra par exemple se reporter à la publication Physical Review A 76(2), 022313, August 2007 de MM. Heid and Lütkenhaus, "Security of coherent state quantum cryptography in presence of gaussian noise".

Certaines applications ne peuvent se satisfaire d'un degré de sécurité moindre.

Dans la publication Physical Review A 74, 032302 (2006), Namiki et al, "Efficient-phase-encoding protocols for continuous-variable quantum key distribution using coherent states and postselection", des voies d'amélioration du procédé vis-à-vis de la sécurité sont proposées qui s'intéressent notamment à la définition du nombre d'états cohérents et de leur phase.

*EXPOSE DU PROBLEME TECHNIQUE ET DE SA SOLUTION*

L'invention a pour objet de proposer un procédé de distribution quantique à variables continues, qui garantit la sécurité de la clé secrète dans sa conception la plus large, avec une portée et une vitesse améliorée.

On a exposé supra les limites des procédés à variables continues et modulation continue.

Les procédés à variables continues et modulation discrète souffrent quant à eux d'un défaut de preuve de sécurité. Ce défaut de preuve est une conséquence directe de l'opération de post-sélection. Mais si on supprime la post-sélection, on perd tous les avantages d'une réconciliation plus simple (Cascade, Winnow). En outre, la quantité d'information mutuelle à Alice et Bob est alors bien moins bonne que dans le cas d'une modulation gaussienne. En effet, la modulation discrète correspond à une modulation de phase binaire (modulation BPSK). Bob peut détecter +A ou -A (au facteur de transmission près), ce qui signifie que l'on transmet au mieux un bit par symbole.

Sur la figure 1a, on a représenté sous la référence 2, la courbe de Shannon pour une modulation binaire BPSK sur un canal à bruit blanc additif gaussien (canal BPSK), et sous la référence 1, la courbe de Shannon pour une modulation gaussienne sur un canal à bruit blanc additif gaussien (canal gaussien). Cette courbe 2 met en évidence qu'avec une modulation BPSK, la capacité du canal est au maximum de 1 bit, alors qu'elle n'est pas limitée pour une modulation gaussienne : une modulation binaire ne permet au mieux que de transmettre un bit par information quantique. Ainsi, la modulation binaire est elle moins intéressante que la modulation gaussienne.

En outre, la détermination de la quantité d'information détenue par Eve, sur des formules correspondant à un modèle binaire (canal BPSK), souffre d'un défaut de preuves de sécurité. On a donc un défaut de preuve de sécurité sur la clé obtenue à la fin de la phase d'amplification de secret.

Enfin, pour qu'un procédé permette la distribution d'une clé, il est impératif de conserver une efficacité de réconciliation raisonnable. On a vu que cette efficacité de réconciliation est une fonction de la capacité de canal et du rapport signal sur bruit. Ainsi une modulation discrète ne permet généralement pas de conserver une efficacité de réconciliation raisonnable.

*RESUME DE L'INVENTION*

Un objet de l'invention est de chercher à rendre compatibles l'utilisation d'une modulation discrète (sans post-sélection) et des formules générales de détermination du taux d'extraction de clé secrète établies pour un canal gaussien.

Dans l'invention, on a cherché à concilier modulation discrète, preuve de sécurité et efficacité de réconciliation.

Ce problème est résolu par un procédé selon l'invention, dans lequel un signal quantique émis correspond à une modulation aléatoire de la phase d'un état quantique cohérent, sur un ensemble fini de valeurs de phase, l'amplitude des états cohérents transmis étant constante et choisie telle que la variance du signal émis, égale au carré de l'amplitude, est inférieure ou égale à quelques unités de bruit de photons, et une détection homodyne limitée au bruit de photon, est mise en oeuvre, sans seuillage préalable pour la réconciliation, et la phase d'amplification de secret est basée sur un taux d'extraction de clé sécrète tel que calculé d'après les formules établies pour un canal gaussien, et utilisé dans les procédés de distribution quantique de clé à modulation gaussienne variables continues.

L'invention concerne donc un procédé de distribution quantique d'une clé, comprenant une phase d'échange quantique entre un émetteur Alice et un récepteur Bob, dans laquelle l'émetteur Alice émet aléatoirement N états cohérents quantiques, chaque état étant formé par une modulation discrète aléatoire de la phase d'un état quantique cohérent d'amplitude donnée, par sélection aléatoire d'une valeur de phase parmi un nombre fini de valeurs possibles, et le récepteur Bob mesure pour chaque état reçu, une quadrature choisie aléatoirement, au moyen d'une détection homodyne, et révèle à l'émetteur la base de mesure correspondante, permettant à l'émetteur d'établir une chaîne de N données de quadrature émises, correspondant à la chaîne des N données de quadrature mesurées par le récepteur, et une phase de réconciliation de données basée sur lesdites chaînes de données émises et mesurées, caractérisé en ce que l'amplitude desdits états quantiques émis dans la phase d'échange quantique est fixée par une valeur de variance choisie pour imposer un domaine de travail dans lequel la capacité de canal est indépendante de ladite modulation appliquée, et égale l'information de Shannon pour un canal gaussien, et en ce que ladite étape de réconciliation est réalisée sans étape préalable de seuillage, ou de post sélection, desdites données de quadrature émises ou reçues, en utilisant un code linéaire de correction d'erreur binaire dont le rendement correspond à un rapport signal sur bruit estimé pour ladite phase d'échange quantique pour fournir en sortie une séquence binaire de longueur n, et en ce qu'une phase d'amplification de secret fournit une clé secrète à partir de ladite séquence binaire, de longueur réduite à un nombre égal à un taux d'extraction de clé secrète calculé à partir d'équations établies pour un canal gaussien.

Ce procédé exploite la zone de la courbe 2 illustrée sur la figure 1a, qui est proche de l'origine, et qui correspond à un rapport signal sur bruit faible. La figure 1b en est un agrandissement autour de l'origine : pour des faibles valeurs de rapport signal sur bruit SNR, les deux courbes se confondent. En d'autres termes, à faible rapport signal sur bruit, la capacité de transmission d'un canal quantique est aussi bonne en modulation binaire qu'avec une modulation gaussienne, et l'invention exploite cette caractéristique qui permet d'utiliser les modèles de calcul correspondant à une modulation gaussienne, et en particulier, les preuves de sécurité qui s'y attachent.

On montre que l'on sait trouver ou construire des codes linéaires de correction d'erreur binaire dont le rendement correspond au faible rapport signal sur bruit dans cette zone.

D'autres avantages et caractéristiques de l'invention sont détaillés dans la description suivante en référence aux dessins illustrés, à titre d'exemple non limitatif. Dans ces dessins :

- les figures 1a et 1b illustrent la capacité de canal en fonction du rapport signal sur bruit, pour un canal gaussien (à bruit blanc additif gaussien), dans le cas d'une modulation gaussienne (limite de Shannon) et d'une modulation binaire;
- les figures 2a et 2b sont des représentations symboliques dans l'espace des phases des états cohérents respectivement émis et reçus;
- la figure 3 est un schéma bloc illustrant la phase d'échange quantique d'un procédé selon l'invention;
- la figure 4 illustre la courbe donnant le taux d'extraction de clé secrète en fonction de la variance du signal émis;
- la figure 5 est un schéma bloc représentatif des différentes phases d'un procédé de réconciliation inverse selon l'invention;
- la figure 6 est un schéma illustrant une phase de réconciliation inverse selon une première mise en oeuvre de l'invention;
- la figure 7 est un schéma illustrant une phase de réconciliation inverse selon une deuxième mise en oeuvre de l'invention, utilisant un code à répétition;
- la figure 8 montre une courbe expérimentale de l'efficacité de réconciliation en fonction du rapport signal sur bruit, pour une modulation gaussienne et une modulation binaire;

Le procédé de distribution quantique selon l'invention est un procédé utilisant une modulation discrète de variables continues, qui sont des états quantiques cohérents, et une détection interférométrique homodyne limitée au bruit de photon.

Il est mis en oeuvre dans un système de télécommunication comportant au moins un émetteur, ci après dénommé Alice et au moins un récepteur, ci après dénommé Bob, un canal quantique du type à bruit additif gaussien (fibre optique, espace libre), et un canal de communication dit public, généralement une liaison internet.

Dans l'invention on s'intéresse plus particulièrement à un système de télécommunication dans lequel le canal quantique est une fibre optique à la longueur d'onde dite télécom, autour de 1550 nm. Ce système peut par exemple comprendre les moyens matériels du système de télécommunication décrit dans la demande EP1825633 précitée.

L'exécution par Alice et Bob d'un procédé selon l'invention leur permet de partager à la fin une clé secrète connue d'eux seuls, qu'ils vont pouvoir utiliser pour une opération de cryptographie classique.

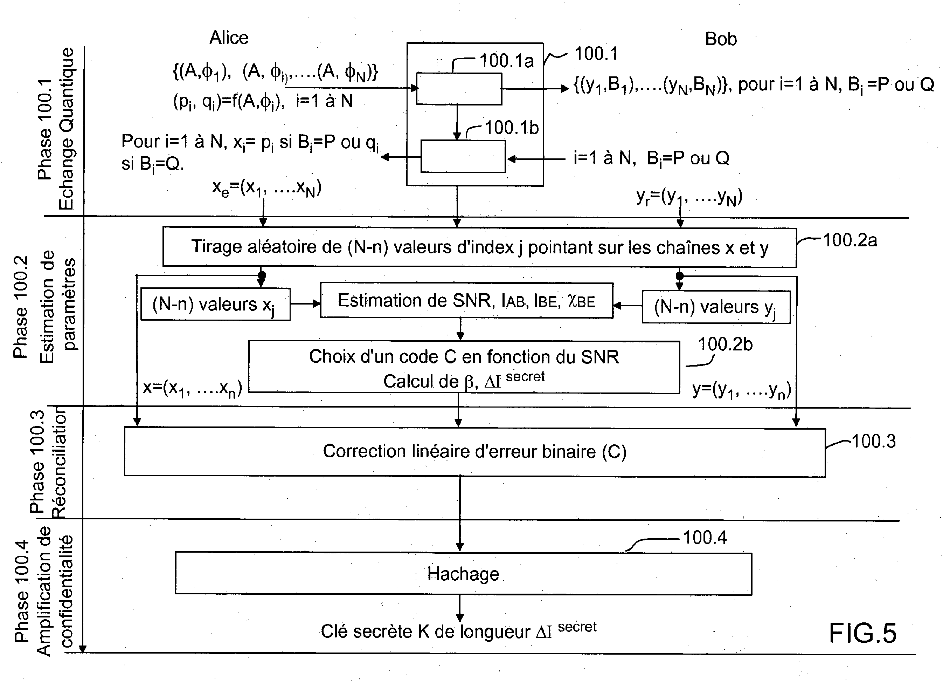

Le procédé de distribution quantique selon l'invention comprend comme illustré sur la figure 5, les quatre phases habituelles des procédés de distribution quantique de clé à variables continues. Ce sont les phases habituelles d'échange quantique d'estimation de paramètres de l'échange 100.2, de réconciliation de données 100.3 et d'amplification de secret 100.4, dont les fonctions générales sont rappelées ci après :

- la phase 100.1 d'échange quantique: Alice envoie N états quantiques cohérents à Bob qui les mesure à l'aide d'une détection homodyne. A la fin de cette étape, Alice et Bob possèdent deux vecteurs réels coitélés $x_e$ et $y_r$ de longueur N.
- la phase 100.2 d'estimation des paramètres de l'échange : Alice et Bob comparent publiquement un échantillon aléatoire de leurs données, et estiment la taille $\Delta I$ de clé secrète qu'ils peuvent distiller. Si cette taille est négative ou nulle, ils abandonnent le protocole, sinon, ils poursuivent.
- la phase 100.3 de réconciliation de leurs données, de préférence, de réconciliation inverse : Bob forme une séquence binaire Y à partir de son vecteur réel $y_r$ données, moins les données de l'échantillon révélées à l'étape précédente. Bob calcule un syndrome de cette séquence binaire au moyen d'un code de correction d'erreur et il envoie de l'information supplémentaire à Alice afin qu'elle puisse déterminer la séquence binaire Y de Bob, par décodage. A la fin de cette étape, Alice et Bob possèdent la même chaîne binaire Y, qui est en partie connue de l'espion.
- la phase 100.4 d'amplification de secret permet de supprimer toute l'information dont dispose Eve, bornée par un taux d'extraction de clé noté $\Delta I^{SECRET}$. Elle utilise à cet effet, des fonctions de hachage choisies aléatoirement. A la fin de cette étape, Alice et Bob disposent d'une clé secrète de longueur $\Delta I^{SECRET}$.

Le procédé de distribution quantique de clé selon l'invention se distingue notamment en ce qu'il utilise dans la phase d'échange quantique une modulation discrète de la phase des états quantiques cohérents, avec une amplitude fixée par une variance prédéterminée, choisie pour imposer un domaine de travail dans lequel la capacité de canal est indépendante de la modulation, et égale l'information (ou limite) de Shannon, une phase de réconciliation sans étape préalable de seuillage, ou de post sélection, des données, et utilisant un code linéaire de correction d'erreur binaire ayant un rendement correspondant à une estimation du rapport signal sur bruit pour l'échange quantique considéré et un taux d'extraction de clé secrète $\Delta I^{SECRET}$ calculé suivant les équations correspondant au modèle gaussien, telles qu'établies dans les procédés à variables continues et modulation continue.

Ce procédé est décrit plus en détail ci après dans un exemple de mise en oeuvre préféré utilisant une étape de réconciliation inverse.

La phase d'échange quantique 100.1 comprend une première phase 100.1a pendant laquelle Alice émet un signal quantique, c'est-à-dire une suite de N symboles vers Bob, qui les reçoit, et les mesure à l'aide d'une détection homodyne.

Dans l'invention, Alice forme le signal quantique émis au moyen d'une modulation discrète aléatoire sur un nombre fini d'états quantiques cohérents, ayant une même amplitude choisie telle que la variance du signal émis est inférieure ou égale à quelques unités de bruit de photon. En pratique, les meilleurs résultats sont obtenus avec la définition de quatre états cohérents notés E1, E2, E3 et E4, de phase respective $\pi/4$, $3\pi/4$, $5\pi/4$; $7\pi/4$ (radians) : en d'autres termes, c'est une modulation aléatoire de la phase d'un état cohérent d'amplitude A, où la phase peut prendre aléatoirement les valeurs indiquées plus haut.

Les quatre états quantiques cohérents E1, E2, E3 et E4 s'écrivent dans l'espace des phases comme suit :

E1 : $|A(1+i) /\sqrt{2}>$ ; E2 : $|A(1-i) /\sqrt{2}>$ ; E3: $|A(-1-i) /\sqrt{2}>$ ; E4 : $|A(-1+i) /\sqrt{2}>$.

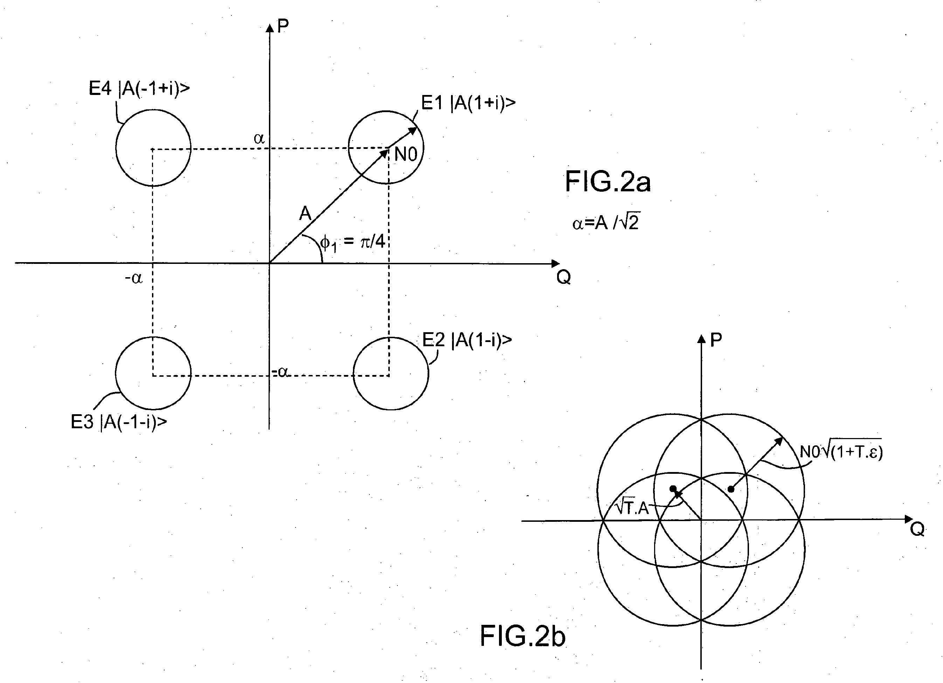

Comme représenté sur la figure 2a, dans l'espace des phases où l'axe des abscisses correspond à la quadrature Q et celui des ordonnées à la quadrature P, chacun de ces états cohérents peut être représenté par un cercle : l'angle entre l'axe de quadrature Q et l'axe passant par l'origine et le centre du cercle est égal à la phase; la distance entre l'origine et le centre du cercle est égal à l'amplitude A et le rayon du cercle est égal à la racine carré de la variance $V_A$ du bruit quantique associé, égal à une unité de bruit de photon.

Dans l'espace des phases, les coordonnées des états cohérents émis par Alice sont ainsi pour E1, $(p_1, q_1)=(\alpha,\alpha)$, pour E2, $(p_2, q_2)=(\alpha,-\alpha)$, pour E3, $(p_3,q_3)=(-\alpha,-\alpha)$ et pour E4, $(p_4, q_4)= (\alpha,-\alpha)$, en prenant par convention $\alpha=A/\sqrt{2}=\sqrt{V_A}/\sqrt{2}$.

Les états cohérents à la réception, sont modifiés, par la transmission T du canal, inférieure à 1 et par l'excès

de bruit $\varepsilon$ : Comme représenté sur la figure 2b, leur amplitude est ainsi égale à $\sqrt{T}.A$ ; et leur rayon, égal à la racine carrée de la variance du bruit qui est égale à $(1+T\varepsilon)$ en unités de bruit de photon.

On montre, comme vérifié expérimentalement, que la modulation utilisée est ainsi équivalente à une modulation BPSK sur un canal à bruit blanc additif gaussien. Les coordonnées de quadrature mesurées par Bob s'expriment ainsi sous la forme $\pm\sqrt{T}.\alpha + z$, où $z$ est une composante représentant le bruit additionnel qui est sensiblement un bruit blanc gaussien : $z \sim N(0, \sigma2)$, de variance $\sigma^2 \geq 1$, *où* $\sigma^2 = 1 + T.\varepsilon$.

Dans l'invention, $V_A$ est une valeur fixée, choisie égale à quelques unités de bruit de photon, en sorte que la distance à l'origine est faible et les états cohérents se superposent, correspondant à un faible rapport signal sur bruit. Le choix de la variance fixe ainsi le domaine de travail, qui doit correspondre à un faible rapport signal sur bruit. On entend par faible rapport signal sur bruit un rapport au moins inférieur à 2. Dans ce domaine de travail, et comme expliqué précédemment en relation avec les figures 1a et 1b, la capacité de canal est indépendante de la modulation, et égale à l'information (ou limite) de Shannon, soit $\mathrm{IAB} = \dfrac{1}{2}\log_2\left[1 + SNR\right]$.

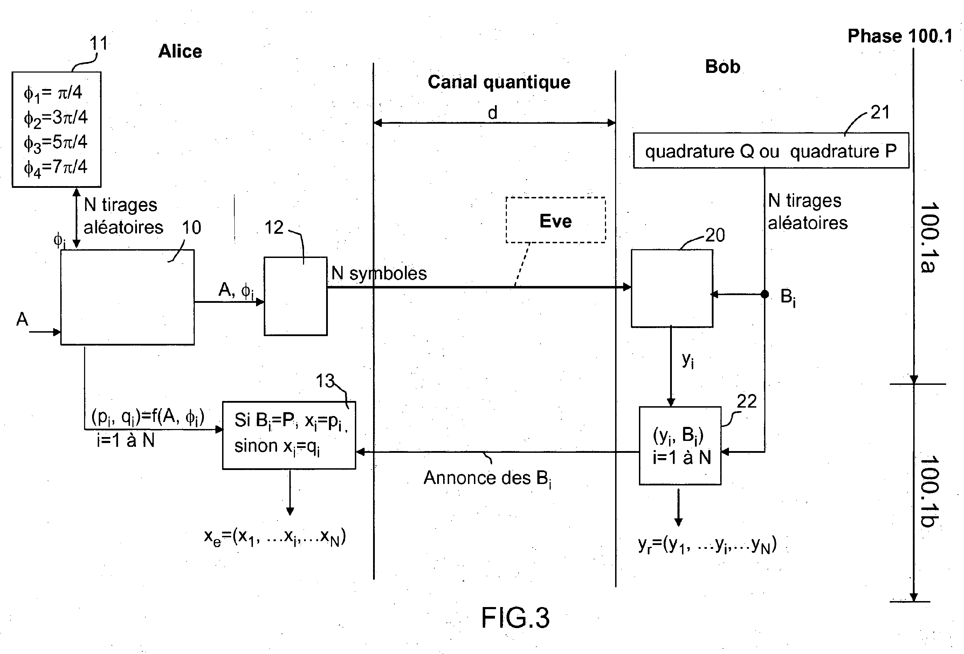

En pratique, et comme détaillé sur la figure 3, Alice comprend des moyens 10 de contrôle de la phase 100.1a d'émission d'une suite de N symboles. Ces moyens 10 :

- activent des moyens 11 de tirage aléatoire d'une valeur de phase $\phi_i$ parmi les 4 valeurs de phase possibles $\pi/4$, $3\pi/4$, $5\pi/4$; $7\pi/4$ qui correspondent aux états $E1(p_1,q_1)$, $E2(p_2,q_2)$, $E3(p_3,q_3)$ et $E4(p_4,q_4)$ de la figure 2b. Alice effectue ainsi N tirages;
- transmettent les N couples de valeurs amplitude A - phase $\phi_i$ à des moyens d'émission 12, qui transmettent en sortie, sur le canal quantique, les N symboles quantiques correspondants;
- transmettent vers des moyens de mémorisation 13, les N couples de coordonnées $(p_i, q_i)$ dans l'espace de phases, correspondant aux N états cohérents transmis $(A , \phi_i)$.

Bob reçoit les N symboles sous une forme bruitée. Il les mesure au moyen d'un détecteur homodyne 20. Il effectue ainsi N mesures. Pour chaque mesure, des moyens 21 effectuent un tirage aléatoire de la base de mesure $B_i$ parmi les deux quadratures possibles Q ou P. Le détecteur 20 fournit en sortie la mesure $y_i$ de la quadrature ainsi déterminée. Des moyens 22, mémorisent pour chacune des N mesures, la valeur mesurée $y_i$ avec sa base $B_i$ de mesure. A l'issue de l'échange, N couples $(y_i, B_i)$ sont ainsi mémorisés.

La deuxième phase 100.1b permet de constituer les deux chaines de données coitélées d'Alice et Bob, en révélant pour chaque symbole la quadrature P ou Q mesurée. Plus précisément, Bob annonce à Alice, publiquement, c'est-à-dire par un moyen de communication public, généralement un réseau dédié, la base de mesure $B_i$, pour chacune des N mesures. Pour chaque mesure, Alice ne garde que la coordonnée de la quadrature correspondante : par exemple, si $B_i = P$, Alice conserve la coordonnée $p_i$.

Alice constitue et mémorise (en 13, Figure 2), une chaine de données $x_e = (x_1, x_2,...x_i, ...x_N)$, dans laquelle chaque composante $x_i$, i =1 à N, est égale à la valeur réelle émise, $p_i$ ou bien $q_i$ selon que $B_i$ égal P ou Q, pour la quadrature mesurée par Bob, $y_i$.

Bob ne conserve en 22 que la chaîne de données $y_r = (y_1, ...,y_N)$ des valeurs réelles mesurées. Ces chaines de données $x_e$ et $y_r$ sont corrélées.

La phase d'échange quantique 100..1 est terminée.

Aucun seuillage des données reçues et mesurées par Bob n'est effectué. On vérifié ainsi expérimentalement, et on peut justifier théoriquement, que les données $x_e$ et $y_r$ d'Alice et Bob sont les mêmes que celles que l'on rencontre dans le cas où Alice utilise une modulation BPSK sur un canal de type à bruit blanc additif gaussien. On est ainsi ramené à un problème de codage de canal pour une modulation BPSK avec un bruit additif blanc gaussien, dans un domaine de travail où la capacité de canal, en fonction du rapport signal sur bruit SNR, représentée par la courbe 2 des figures 1a et 1b, est égale à l'information de Shannon.

En effet, selon l'invention, l'amplitude A des états cohérents émis par Alice est choisie telle que la variance $V_A$ du signal émis, égale au carré de l'amplitude A, est inférieure à quelques unités de bruit de photon. Cette condition permet de s'assurer de toujours travailler à un rapport signal sur bruit SNR faible. Dans l'invention, on entend par faible rapport signal sur bruit, un rapport signal sur bruit pour lequel la capacité de canal BPSK est égale à l'information de Shannon pour un canal gaussien.

En pratique, ce domaine de travail correspond à un rapport signal sur bruit inférieur ou égal, à une valeur limite L, indiquée par un trait vertical pointillé sur la figure 1a, et qui est de l'ordre de 2.

Dans une mise en oeuvre de l'invention, on choisit une variance $V_A$ inférieure ou égale à environ 3 unités de bruit de photon. On est alors assuré de travailler dans le domaine souhaité.

Le domaine de travail selon l'invention permet d'exploiter la limite de Shannon, qui rappelons-le, est associée à une modulation gaussienne sur un canal à bruit additif gaussien. C'est ainsi que dans l'invention, on utilise les équations établies pour un canal gaussien, pour calculer le taux d'extraction de clé secrète, que l'on note $\Delta I^{SECRET}$. Ce taux $\Delta I^{SECRET}$ donne le nombre de bits par symbole qui pourra être extrait des chaines de données corrélées d'Alice et Bob.

Les équations qui permettent son calcul sont détaillées dans la publication précitée de Lodewyck et al. On a ainsi notamment :

$\Delta I^{SECRET} = \Delta I^{SHANNON} = \beta.I_{AB} - I_{BE}$, qui est le taux d'extraction de clé dit de Shannon, ou $\Delta I^{SECRET} = \Delta I^{HOLEVO} = \beta.I_{AB} - \chi_{BE}$, qui est le taux d'extraction de clé dit de Holevo.

Dans ces expressions, $I_{AB}$ est une caractéristique du procédé de distribution quantique, égale à l'information de Shannon (courbe 1, figure 1a). $\beta$ est une caractéristique de la phase de réconciliation et $I_{BE}$ et $\chi_{BE}$, qui sont des expressions de la limite supérieure bornant la quantité d'information que l'on suppose connue d'Eve, et qu'il faudra supprimer dans la phase dite d'augmentation de la confidentialité, sont le reflet des preuves de sécurité attachées au procédé de l'invention, basé sur l'optimalité des attaques gaussiennes. On rappellera que le taux dit de Holevo correspond au cas où l'on considère que l'espion Eve dispose d'un ordinateur quantique, ce qui lui permet d'extraire plus d'information, $\chi_{BE}$ que l'information classique $I_{BE}$. En d'autres termes, on a $\chi_{BE} > I_{BE}$, soit $\Delta I^{HOLEVO} < \Delta I^{SHANNON}$.

Les quantités $I_{BE}$ et $\chi_{BE}$ sont ainsi calculées par les mêmes équations que dans les procédés de distribution à variables continues et modulation continue. Ces équations sont bien connues de l'homme de l'art. Elles sont rappelées dans la publication précitée Lodewyck et al (voir les équations (3) et (4) notamment en page 3 de la publication), des paramètres de l'échange quantique : variance $V_A$, transmission T, qui est un paramètre du canal quantique (de la fibre optique), et dépend de sa longueur d; et de l'excès de bruit $\varepsilon$, c'est à dire le bruit en plus du bruit de photon. En l'absence d'espion, cet excès de bruit $\varepsilon$ est une fonction simple, et connue, de l'efficacité quantique $\eta$ de la détection homodyne chez Bob et du bruit électronique $V_{el}$, qui sont connus.

Dans le procédé de l'invention, à variables continues, et dans le domaine de travail considéré où modulation BPSK et modulation gaussienne sont équivalentes, on peut utiliser les modèles établis pour un canal gaussien, qui ont l'avantage de disposer de preuves de sécurité générales.

Alors pour T et $\varepsilon$ donnés, les quantités $I_{BE}$ et $\chi_{BE}$ sont imposées par les lois de la physique, pour une variance $V_A$ donnée, quel que soit le procédé à variables continues et la modulation considérée.

Dans une mise en oeuvre avantageuse de l'invention, on choisit la variance $V_A$ de manière à optimiser le taux de clé secrète.

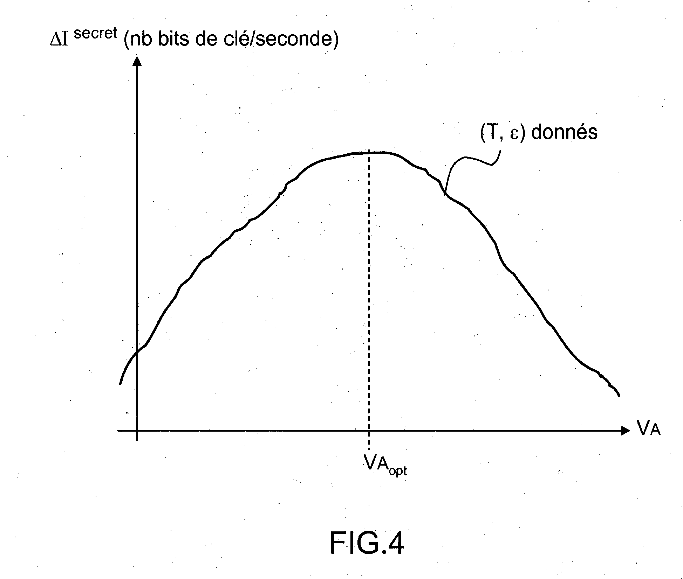

En effet, on montre que pour un système de télécommunication donné, pour une longueur d donnée du canal quantique utilisé par Alice et Bob, il existe une valeur de variance optimale $V_{AOPT}$ qui permet d'optimiser le taux d'extraction de clé, en fonction des paramètres connus de ce système, T et $\varepsilon$. La courbe correspondante est illustrée sur la figure 4. Cette valeur optimale $V_{AOPT}$ est la valeur qui minimise la quantité d'information que peut détenir Eve. Elle est typiquement comprise dans une plage autour de 2 à 3 unités de bruit de photon.

Dans l'invention, c'est de préférence cette valeur optimale $V_{A_{opt}}$ qui est utilisée par Alice pour définir l'amplitude A des états cohérents E1, E2, E3, et E4 de la modulation discrète.

Les taux de clé secrète calculés pour Holevo et pour Shannon conduisent à des optimisations qui peuvent différer légèrement. Comme on s'intéresse en général à la sécurité la plus forte possible, on considérera de préférence l'information de Holevo $\Delta I^{HOLEVO}$, pour optimiser la variance $V_A$.

La deuxième phase du procédé est la phase d'estimation 100.2 des paramètres de l'échange quantique (Figure 5).

De manière habituelle, cette phase nécessite la divulgation publique d'un nombre déterminé d'échantillons de valeurs des chaînes de données émises $x_e$ et reçues $y_r$. Ces chaînes sont de longueur N.

Dans une première étape de calcul 100.2a, (N-n) données choisies aléatoirement, sont prélevées dans les deux chaînes x et y. Il faut comprendre que c'est le rang j de la donnée prélevée dans les chaines $x_e$ et $y_r$ qui est aléatoire, Alice et Bob prélevant chacun la donnée de rang correspondant, et la révélant à l'autre. Alice et Bob calculent alors chacun le taux de corrélation (ou les moments d'ordre 2) de ces N-n échantillons de données corrélées. En pratique, N-n est choisi suffisamment grand pour que l'estimation de paramètres ait la précision requise.

Alice et Bob suppriment de leurs chaînes de données $x_e$ et $y_r$ les (N-n) données révélées à l'étape 100.2a. On écrit ces chaînes de données de longueur n : $x=(x_1,...x_n)$ pour Alice et $y=(y_1,...y_n)$ pour Bob. Elles sont de longueur n. Ce sont les chaînes qui seront utilisées dans la phase de réconciliation.

Dans une deuxième étape de calcul 100.2b, Alice et/ou Bob estiment à partir des (N-n) échantillons de données des chaînes $x_e$ et $y_r$ révélés, les paramètres qui vont leur permettre de quantifier le taux d'extraction de clé secrète pour les chaines x et y obtenues. Notamment, ils en déduisent une estimation de la transmission T, et de l'excès de bruit $\varepsilon$ pour cet échange quantique. Ils en déduisent la valeur courante du rapport signal sur bruit SNR estimé pour cette phase d'échange quantique, l'information mutuelle $I_{AB}$, égale à la limite de Shannon, c'est-à-dire égale à $\frac{1}{2}\log_2[1+SNR]$,

et la quantité d'information maximale dont dispose Eve sur les valeurs de Bob, en fonction de SNR, $V_A$, T et $\varepsilon$. Pour la quantité d'information de Eve, on peut considérer l'information de Shannon, $I_{BE}$, ou de Holevo, $\chi_{BE}$. En outre plusieurs équations bien connues de l'homme de l'art peuvent être utilisées, comme celles indiquées dans la publication Lodewyck et al, selon que l'on considère une hypothèse réaliste dans laquelle on n'impute pas à un espion EVE les bruits associés à la détection homodyne, $V_{el}$ et $\eta$, ou une hypothèse sévère dans laquelle on impute la totalité des bruits à l'espion Eve.

On sait choisir de manière connue un code linéaire de correction d'erreur binaire de faible rendement r, pour la valeur estimée du rapport signal sur bruit. On rappelle qu'un code linéaire de longueur n et de rendement r, est un code qui contient $2^{r.n}$ mots de code de n bits.

Si le rendement r est typiquement supérieur à 0,1 environ, les codes linéaires de correction d'erreur binaire pourront être typiquement choisis parmi les turbo-codes, les codes LDPC. Dans la présente description, le terme code LDPC englobe une version généralisée appelée code LDPC de type "multi-edge". Les codes multi-edge sont par exemple décrits dans la publication de T.Richardson, et R.Urbanke : "multi-edge type LDPC codes ", Workshop honoring Prof. Bob McEliece on his 60th birthday, Califomia Institute of Technology, Pasadena, May 2002, pages 24-25. Dans le cas où le rapport signal sur bruit estimé impose de travailler à rendement plus faible, on construit des codes linéaires spécifiques à partir des codes précités selon un procédé qui est décrit dans la suite de la description.

On montre que dans l'invention, le choix de $V_A$, associé à une modulation discrète, sans post-sélection des données, permet de choisir un code à faible rendement r pour le rapport signal sur bruit estimé, tel que la valeur correspondante d'efficacité de réconciliation, que l'on note $\beta_e$, reliée au rendement du code r par la relation :

$$r = \beta_e.\text{IAB} = \beta_e.\left(\frac{1}{2}\log_2[1 + SNR]\right)$$, permet de maximiser le taux d'extraction de clé $\Delta I^{SHANNON}$, si on a utilisé

$I_{BE}$, ou de préférence, $\Delta I^{HOLEVO}$ si on a utilisé $\chi_{BE}$.

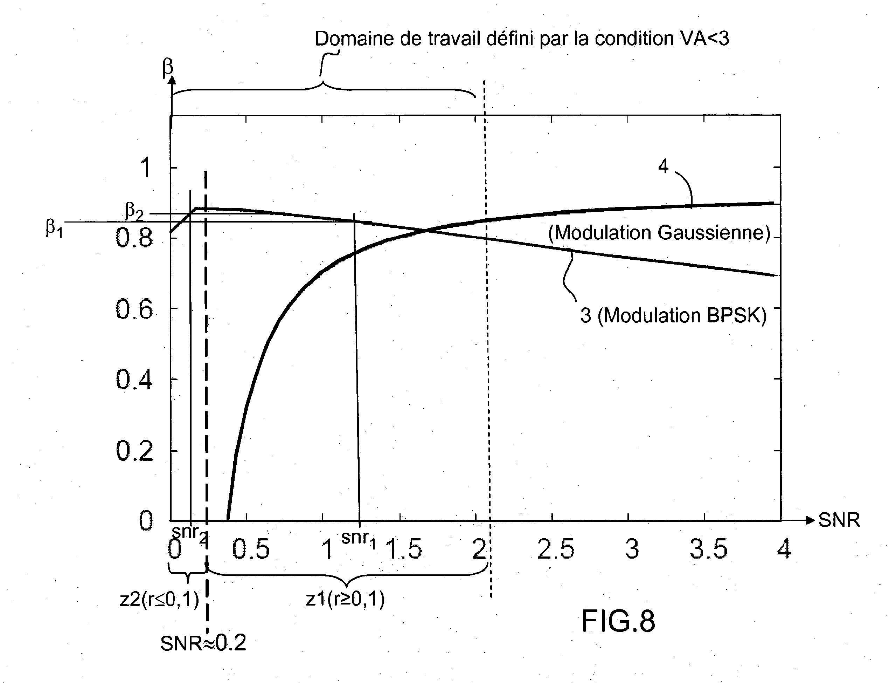

On sait tracer une courbe expérimentale 3 illustrée sur la figure 8, qui donne la valeur de l'efficacité de réconciliation $\beta_e$, en fonction de la valeur estimée du rapport signal sur bruit SNR. Elle montre que quand le rapport signal sur bruit tend vers zéro, on sait trouver un code correcteur d'erreur tel que l'efficacité de réconciliation reste au moins supérieure à 80%.

En pratique, cette courbe expérimentale est obtenue en utilisant les codes LDPC connus (dont on trouve des descriptions dans la littérature spécialisée), pour différents rapports signal-à-bruit. En observant le comportement de ces codes, en particulier, en regardant le rapport SNR minimal auquel ils sont capables de décoder (pour un rendement r donné), on obtient un point expérimental. Ensuite, la courbe est tracée en interpolant ces divers points.

Pour une itération donnée, une phase d'échange quantique et une phase d'estimation correspondante, conduisant à un rapport signal sur bruit estimé de valeur $snr_1$, cette courbe fait ainsi correspondre la valeur $\beta_e = \beta_1$. Pour une autre itération pour laquelle le rapport signal sur bruit serait estimé à la valeur $snr_2$, cette courbe fait ainsi correspondre la valeur $\beta_e = \beta_2$.

Selon l'invention, et comme illustré par cette courbe de la figure 8, ce mode de détermination permet que le taux d'efficacité de réconciliation $\beta_e$ reste aux alentours de 0,8 (80%), quand le rapport signal sur bruit tend vers 0.

On remarquera que pour un même système de communication, deux instanciations successives d'un procédé de distribution quantique de clé, devraient conduire dans des conditions normales, sans espion, à des valeurs estimées proches. Ainsi, si on observe une variation significative, c'est qu'il y a eu espionnage.

On remarquera sur la figure 8, que la courbe 3 correspondant à la modulation BPSK sur un canal à bruit blanc additif gaussien utilisée dans l'invention permet de déterminer une efficacité de réconciliation pour des rapports signal à bruit très faibles proches de 0, ce qui ne serait pas le cas avec une modulation gaussienne, comme illustré sur cette même figure par la courbe 4. La comparaison de ces deux courbes 3 et 4 montre que dans le domaine de travail de l'invention, délimité au moyen de la variance choisie $V_A$, un procédé de distribution quantique à modulation gaussienne à variables discrètes, sans seuillage, selon l'invention, permet d'extraire efficacement une clé, ce que ne permet pas un procédé à variables continues dans ce même domaine.

A partir de ces différents paramètres estimés, Alice et Bob peuvent alors calculer le taux d'extraction de clé secrète. Si ce taux est négatif ou nul, le procédé s'interrompt.

Sinon, Alice et Bob se mettent d'accord sur un code correcteur linéaire d'erreur binaire à utiliser dans la phase suivante de réconciliation.

Cette réconciliation doit opérer sur des séquences binaires longues. En effet, pour que les codes correcteurs d'erreurs approchent suffisamment la limite de Shannon, n doit en pratique être au moins de l'ordre de $10^5$. Des valeurs courantes de n se situent dans la plage $10^5$ à $10^7$.

Les codes correcteurs linéaires d'erreur binaire utilisés, et leur codage et décodage associés sont bien connus de l'homme de l'art et ne seront donc pas détaillés.

Soit donc $C_{n,r}$, le code correcteur linéaire choisi de paramètres n, sa longueur, égale à la longueur des séquences binaires Y à traiter et r son rendement. Sa matrice de parité H est de dimensions n.(1-r)n. La longueur des syndromes $s_C$= Y.H est ainsi égale à (1-r)n : c'est le nombre de bits de contrôle supplémentaires fournis à Alice pour corriger les erreurs et retrouver la séquence Y de Bob. On calcule le taux d'efficacité correspondant

$$\beta_e = r/I_{AB} = r/\left(\frac{1}{2}\log_2[1 + SNR]\right)$$

Une fois le code $C_{n,r}$ sélectionné, la phase de réconciliation 100.3 commence. Dans la mise en oeuvre décrite, il s'agit d'une phase de réconciliation inverse par laquelle Alice doit retrouver la séquence binaire Y que Bob détient, et qui correspond à la binarisation de la chaine y des données réelles $y_i$.

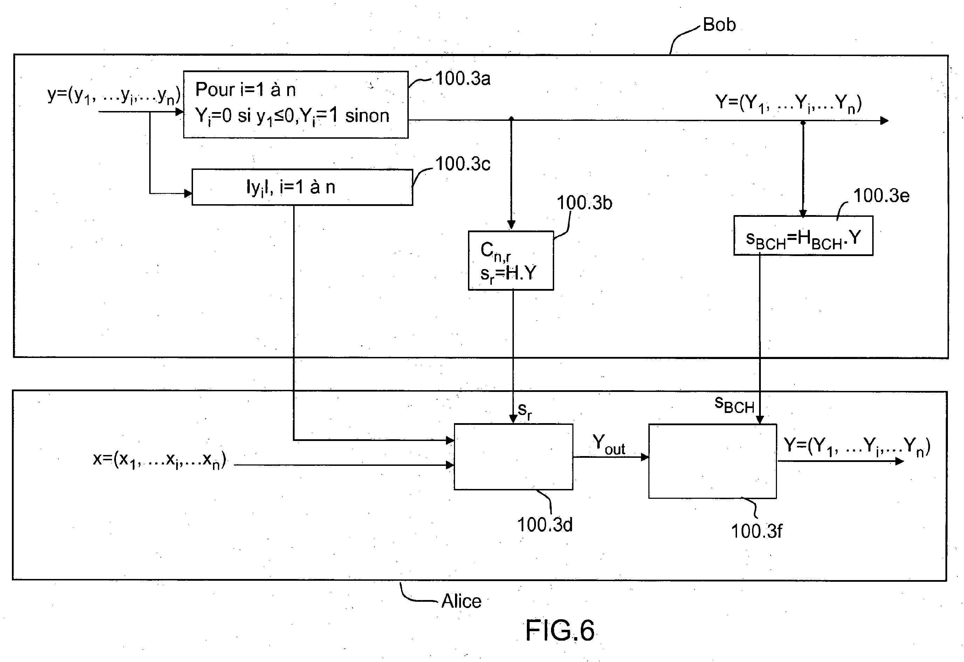

Dans l'invention, lorsque le rendement r calculé à partir des conditions expérimentales comme indiqué plus haut est supérieur ou égal à environ 0,1, alors la phase de réconciliation 100.3 suit un schéma classique bien connu, qui est illustré de manière schématique sur la figure 6. Selon ce schéma classique de réconciliation inverse, Bob fournit à Alice le syndrome $s_r$ = H.Y. Il doit aussi fournir à Alice une information sur le bruit ajouté par le canal. Ceci est réalisé par Bob, par la fourniture des valeurs absolues des valeurs réelles $y_i$ de la chaîne y. Ces valeurs absolues étant indépendantes du signe de la mesure, révéler ces informations n'apporte aucune information à un éventuel espion. Muni de ces informations, et de sa chaîne de données x, Alice procède alors à un décodage, de préférence suivant un algorithme itératif à décision souple, pour obtenir en sortie la séquence binaire Y de Bob.

De manière plus détaillée :

Bob effectue une binarisation 100.3a : il transforme sa chaîne y de données de n mesures réelles $y_i$, en une séquence binaire Y de n bits Y=($Y_1$, ...$Y_n$). Comme détaillé en relation avec la figure 2b, une valeur réelle $y_i$ peut être positive ou négative. La binarisation effectuée par Bob peut par exemple utiliser la convention suivante : si $y_i \leq 0$, Y=0, et Y=1 sinon. Alice connait la convention utilisée.

Bob effectue un encodage 100.3b de cette séquence binaire Y, en utilisant la matrice de parité H correspondant au code correcteur linéaire $C_{n,r}$ choisi de longueur n et de rendement r. La matrice H a pour dimensions n sur (1-r)n. Le syndrome correspondant : $s_C$=H.Y a une longueur n(1-r)bits.

Pour chaque valeur réelle $y_i$ de la séquence y, Bob effectue le calcul 100.3c de la valeur absolue, qu'il fournit à Alice, ainsi que le syndrome $s_C$, par un canal public.

Alice applique sa chaîne de données $x_i$, les valeurs absolues $|y_i|$ et le syndrome $s_C$ en entrée de son module de décodage 100.3d, qui fournit en sortie une séquence binaire réconciliée que l'on note $Y_{out}$, qui doit correspondre à la séquence binaire Y. Le module de décodage implémente de manière connue un algorithme itératif à décision souple, pour retrouver la séquence Y à partir de x et $s_r$. Cet algorithme utilise des calculs de vraisemblance, et plus particulièrement de log-vraisemblances, pour déterminer pour chaque $x_i$, quel est la valeur la plus vraisemblable du bit $Y_i$ : 0 ou 1.

Rappelons que $Y_i$=0, respectivement $Y_i$=1 signifie par convention que la donnée mesurée $y_i$ est négative, respectivement positive ou nulle.

Pour chaque donnée physique $x_i$, le module 100.3d' d'Alice calcule la vraisemblance de chacune des deux éventualités, $Y_j$=0, et $Y_i$=1, en utilisant comme information sur le bruit ajouté par le canal, les valeurs absolues $|y_i|$ transmises par Bob.

Pour chaque $x_i$, Alice calcule ainsi la log-vraisemblance $L(x_i, |y_i|)$, qui s'écrit :

$$L(x_i, |y_i|)=\log_2 .\exp\left(-\frac{(|y_i| - x_i)^2}{2\sigma^2}\right) \Big/ \exp\left(-\frac{(-|y_i| + x_i)^2}{2\sigma^2}\right)=\pm\frac{2\alpha|y_i|}{\sigma^2} \text{ (avec A=}\sqrt{2}.\alpha \text{ ; } x_i=\pm\alpha).$$

On ne détaillera pas plus le décodage par algorithme itératif et décision souple, et les calculs de vraisemblance utilisés, qui sont bien connus de l'homme de l'art.

En pratique, il peut rester quelques erreurs entre $Y_{out}$ et Y. Aussi prévoit-on généralement l'utilisation d'un code cyclique de correction d'erreur binaire, appelé code BCH, pour réconcilier $Y_{out}$ et Y.

Typiquement, Bob effectue le calcul 100.3e du syndrome correspondant $S_{BCH}$=$H_{BCH}$.Y, qu'il transmet à Alice, $H_{BCH}$ étant la matrice de parité du code BCH utilisé. Alice effectue le décodage du code BCH 100.3f, à partir de la sortie $Y_{out}$ du premier décodage 100.3d et du syndrome $S_{BCH}$. En sortie, Alice obtient la séquence binaire Y de Bob. Ce mécanisme de correction supplémentaire est habituel.

Nous venons de décrire un schéma de réconciliation inverse. Dans une variante, le procédé met en oeuvre un schéma de réconciliation directe, dans lequel c'est Bob qui met en oeuvre le décodage du code correcteur d'erreur linéaire, pour retrouver la séquence binaire correspondant à la séquence de valeurs réelles $x_e$ émise par Alice. Ce schéma de réconciliation est plus simple à mettre en oeuvre. Notamment, comme la chaine y mesurée contient l'information du bruit ajouté par le canal, Alice doit seulement transmettre à Bob le syndrome correspondant à la séquence binaire correspondant à sa chaine $x_e$, et au code choisi. Bob peut alors pour chaque $y_i$ calculer la log vraisemblance de chaque éventualité $x_i = \alpha$ ou $x_j = -\alpha$, ce qui s écrit :

$$L(y_{i,}) = \log\left[\exp\left(-\frac{(y_i - x_i)^2}{2\sigma^2}\right)\middle/\exp\left(-\frac{(y_i + x_i)^2}{2\sigma^2}\right)\right] = \frac{2\alpha y_i}{\sigma^2}.$$

Un schéma de réconciliation correspondant se déduit du schéma de la figure 6 en inversant les rôles d'Alice et Bob eu égard au codage et au décodage, et en supprimant la partie transmission de valeurs absolues. Ce schéma est cependant moins performant en termes de sécurité.

Le schéma de réconciliation (inverse ou directe) qui vient d'être décrit en référence à la figure 6 correspond à une situation où il existe un code correcteur linéaire $C_{n,r}$ qui offre un rendement r correspondant aux conditions expérimentales de rapport signal sur bruit SNR. Dans ce cas, l'efficacité de réconciliation obtenue, $\beta_e$, donnée par l'équation :

$\beta_e = r/IAB$, où IAB est l'information de Shannon : $IAB = \dfrac{1}{2}\log_2[1 + SNR]$, est au moins égal à 0,8 (80%), selon l'invention.

En pratique, pour des conditions expérimentales données, deux situations sont rencontrées selon que le rapport signal sur bruit estimé impose un rendement r du code à utiliser, supérieur ou inférieure à un seuil donné, de l'ordre de 0,1.

- le rendement r est supérieur ou égal à ce seuil : On connait des codes linéaires pouvant offrir un tel rendement. En particulier, on sait paramétrer de manière performante des codes linéaires de type LDPC ou turbo-code pour obtenir un tel rendement, et on sait garantir une efficacité de réconciliation minimale, c'est-à-dire au moins égale à 0,8. Par exemple, supposons que les conditions expérimentales sont telles que le rapport signal sur bruit est estimé égal à 0,2. La formule reliant r et $\beta$, $r = \beta.IAB$, donne r égal à 0,1 pour $\beta$ sensiblement égal à 0,8.
- le rendement r est inférieur ou égal à ce seuil. Supposons par exemple que les conditions expérimentales sont telles que le rapport signal sur bruit est estimé égal à 0,02. En prenant pour obtenir une efficacité de réconciliation d'au moins 0,8, la formule précédente $r = \beta.IAB$, donne r sensiblement égal à 0,01. Il est alors difficile de construire des codes LDPC ou turbo-codes performants à de tels rendements.

Selon l'invention, lorsque cette situation est rencontrée, on construit un code linéaire de correction d'erreur binaire en combinant un code linéaire de correction d'erreur binaire de rendement r' k fois plus élevé que le rendement r attendu pour le rapport signal sur bruit estimé s, par exemple 10 fois plus élevé, à un code spécifique d'ordre k, qui divise les données à réconcilier par bloc de k données, de manière à maximiser les distances de Hamming. On appelle dans la suite ce code spécifique, code diviseur.

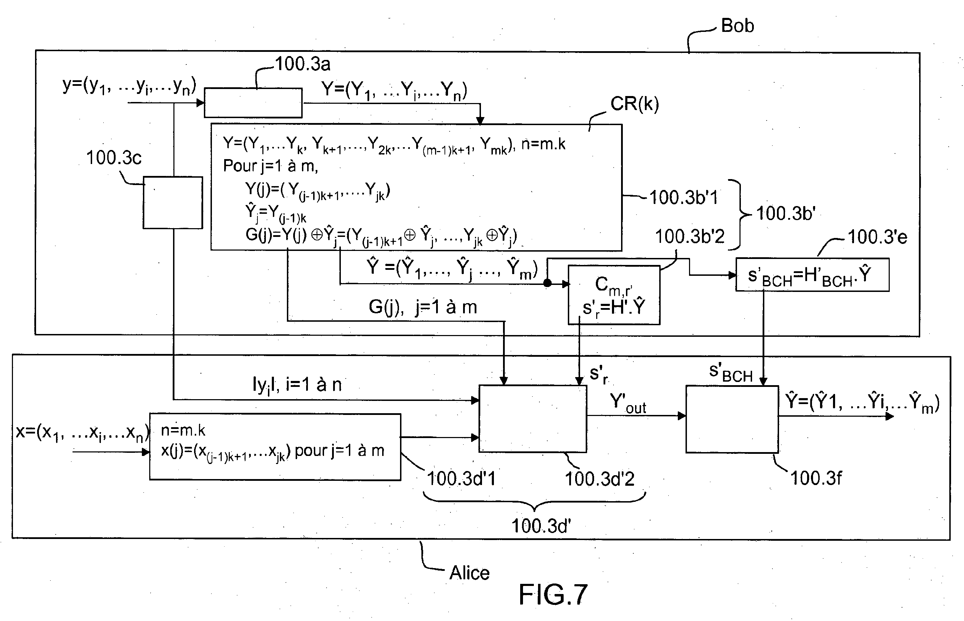

Plus précisément, et comme illustré sur la figure 7 dans le cadre d'une réconciliation inverse, ce code diviseur, les distances de Hamming sont maximisées par une division de la séquence Y de longueur n, en m mots de longueur k, et par une fonction de codage qui fait correspondre à chacun des mots, un bit unique, en sorte qu'une nouvelle séquence binaire $\hat{Y}$ est formée, de longueur réduite m. C'est cette séquence réduite que doit maintenant trouver Alice. La combinaison d'un code linéaire de correction d'erreur binaire à ce code diviseur d'ordre k a pour effet technique d'augmenter artificiellement le rapport signal sur bruit, d'un facteur k. Le rendement $r' = r.k$ du code linéaire utilisé correspond ainsi à un rapport signal sur bruit artificiellement augmenté, égal à s.k. Ainsi, et comme illustré sur la figure 8, on obtient au final un code correcteur d'erreur binaire capable de continuer à assurer un taux d'efficacité de réconciliation de 0,8 (80%) au moins, quand le rapport signal sur bruit estimé s tend vers zéro.

Ainsi, le procédé de l'invention permet d'assurer un taux d'efficacité minimal, au moins de l'ordre de 80%, sur tout le domaine de travail de l'invention.

Il en résulte que le procédé de l'invention autorise une plus grande longueur de canal entre Alice et Bob. En outre, si pour obtenir une même taille de clé (n bits) que dans les procédés de l'état de l'art, comme détaillé ci-après, il est nécessaire d'augmenter le flux de données à échanger (N), cette augmentation du nombre de données à traiter est compensée par une vitesse de décodage améliorée d'un facteur k, en sorte que le débit de clé n'est pas ou peu affecté.

Avant de décrire un mode de réalisation détaillé d'un schéma de réconciliation correspondant à la combinaison d'un code linéaire de correction d'erreur binaire de longueur $m = n/k$ et de rendement r', et d'un code diviseur d'ordre k, en relation avec la figure 7, détaillons le principe général du code diviseur selon l'invention, pour augmenter artificiellement le rapport signal-à-bruit estimé s et maintenir l'efficacité de réconciliation. Ce code s'apparente au principe d'un code à répétition. Aussi, pour l'expliquer, se place t-on dans un premier temps dans le cas d'une réconciliation directe, qui permet d'appréhender simplement le principe d'un code à répétition appliqué à l'invention.

On prend pour simplifier $\alpha + A/\sqrt{2} = 1$. Les coordonnées des données physiques envoyées par Alice sont alors égales à $\pm 1$.

Alice envoie $x_i \in \{1; -1\}$. Bob reçoit $y_j = X_i + z$ où $z \sim N(0, \sigma^2)$.

Ce couple de variables ($x_i$, $y_i$) correspond à une modulation BPSK avec un canal blanc à bruit additif gaussien avec un rapport signal sur bruit SNR=s=$1/\sigma^2$

Pour s< 1, une bonne efficacité de réconciliation impose de travailler avec un code à très bas rendement, typiquement r≈s/(2Ln2).

Si Alice répète chaque signal émis k fois. On a m blocs de k signaux identiques. En particulier dans le premier bloc on a $x_1=x_2=...=x_k$. Elle définit une nouvelle variable associée à ce premier bloc : $X_1^k = \sum_{i=1}^{k} x_i$. $X^k \in \{-k,k\}$. Et fait de même pour chaque bloc suivant.

Bob définit une variable équivalente $Y_1^k = \sum_{i=1}^{k} y_i$ pour le premier bloc de données mesurées correspondantes : $y_1$...à $y_k$.

Ce couple de variables ($X_1^k$, $Y_1^k$) correspond à une modulation BPSK avec un canal blanc à bruit additif gaussien mais pour un rapport signal sur bruit $S^k=k^2/k\sigma^2=k.s$.

En répétant chaque variable $x_i$ k fois, on obtient au final deux vecteurs corrélés X=($X_1^k$,....$X_m^k$) et Y=($Y_1^k$,....$Y_m^k$), (m=nk) : par rapport au schéma de réconciliation de la figure 6, sa longueur a été divisée par k, mais le rapport signal-à-bruit a été augmenté du même facteur k.

On peut ainsi travailler avec un code correcteur linéaire de rendement k fois plus élevé, sans que l'efficacité de réconciliation soit affectée, du moins si le rapport signal à bruit reste petit, typiquement ks inférieur ou égal à 0.1.

En effet, supposons donc que l'on dispose d'un code correcteur linéaire C correspondant à une efficacité de réconciliation $\beta_a$ pour un certain rapport signal-à-bruit SNR égal à s.

En répétant chaque signal k fois, on se ramène à un problème de codage de canal à modulation binaire et bruit gaussien avec un $SNR_b$ égal à s/k. On obtient une efficacité de réconciliation

$$\beta_b = \beta_a \log_2(1+s) \Big/ k \log_2\left(1+\frac{s}{k}\right).$$

Pour s petit devant 1, par exemple pour s de l'ordre de 0.1, ou plus petit, cette expression peut être approximée :

$$\beta_b \approx \beta_a\left(1-\frac{s}{2}\left(\frac{k-1}{k}\right)\right) \geq \beta_a\left(1-\frac{s}{2}\right),$$ ce qui est proche de $\beta_a$ : la répétition utilisée n'affecte pas ou peu l'efficacité de réconciliation.

Si on considère le premier bloc de k données $x_i$, formant la nouvelle variable $X_1^k$, la réconciliation avec code à répétition consistera alors pour Bob à calculer les vraisemblances par rapport aux variables $X_1^k$ et $Y_1^k$.

Pour le bloc correspondant de k données mesurées, Bob calcule leur somme pour former sa variable $Y_1^k$ comme explicité plus haut.

Le calcul de log-vraisemblance effectué par Bob devient alors :

$$L(Y_1^k) = \log\left[\exp\left(-\frac{\sum_{i=1}^{k}(y_i-\alpha)^2}{2k\sigma^2}\right) \Big/ \exp\left(-\frac{\sum_{i=1}^{k}(y_i+\alpha)^2}{2k\sigma^2}\right)\right]$$

Ainsi, pour le décodage, on n'a pas besoin de connaître le détail de chaque $y_i$; $Y_1^k$ suffit.

Supposons donc que dans une instanciation du procédé, Bob mesure n données $y_i$, on regroupe ces n données en m blocs de k données, et on calcule pour chaque bloc j, j=1 à m, la variable $Y_j^k$. On dispose alors de m variables $Y_j^k$ j=1 à m. Le décodage travaille donc sur m=n/k variables $Y_j^k$, soit sur k fois moins de données que le nombre n de données physiques. Ceci représente un gain de temps de calcul non négligeable.

Ce qui vient d'être exposé est le principe théorique de l'utilisation d'un code à répétition dans le cas d'un rapport signal à bruit très faible, et ses effets bénéfiques sur le maintien de l'efficacité de réconciliation et le temps de calcul.

Cependant, il n'est pas utilisable ainsi en pratique : on ne sait pas complètement établir la sécurité d'un procédé dans lequel Alice enverrait k fois la même donnée. En outre, on préfère généralement mettre en oeuvre une réconciliation inverse. Le principe du code à répétition qui vient d'être exposé ne peut être utilisé directement, car Bob ne peut pas choisir d'obtenir k fois de suite le même résultat.

Dans l'invention, on propose un procédé par lequel un code à répétition est construit à posteriori, à partir des n données aléatoires émises par Alice, ou mesurées par Bob : c'est le code diviseur d'ordre k selon l'invention. L'idée générale est de découper les n données en m séquences de k données, de coder chaque séquence par le bit de code égal au bit de signe d'une des k données de la séquence, et de donner à Alice la description des bits de signe de la séquence, à l'exception du bit de signe codant, et les valeurs absolues des k données. Alice peut alors calculer la log-vraisemblance attachée au bit de code non révélé.

De manière plus détaillée, en prenant l'exemple préféré d'une réconciliation inverse :

Bob découpe sa séquence de n données de mesures en m blocs de k données $y_1,....y_k$. Pour chaque bloc, il envoie à Alice les k valeurs absolues correspondantes, ainsi que la description de leur signe, sauf 1. Ceci est obtenu en prenant la séquence binaire correspondante $Y_1, ...Y_k$, et en lui appliquant une addition modulo 2 avec le bit de code : dans l'exemple $Y_1$. Il envoie la séquence résultante, soit dans l'exemple : $(Y_1 \oplus Y_1, ...Y_k \oplus Y_1)$.

Ceci indique à Alice que les deux éventualités pour la séquence considérée sont : la séquence reçue, ou sa séquence complémentaire, et elle peut calculer la log-vraisemblance associée au signe du bit de code non révélé. On peut montrer que l'on obtient bien $Y_1^k$ en calculant la somme suivante :

$$Y_1^k = \sum_{i=1}^{k} x_i \cdot |y_i| \cdot (Y_i \oplus Y_1).$$

Et la log-vraisemblance calculée par Alice, attachée au bit de signe non révélé de Bob s'écrit :

$$L((x_1, x_2, \dots x_k), (|y_1|, |y_2|, \dots |y_3|), (Y_1 \oplus Y_1, \dots Y_k \oplus Y_1)) = 2\alpha . Y_1^k / \sigma^2.$$

Un exemple d'une mise en oeuvre de ce procédé de réconciliation avec code diviseur d'ordre k est illustrée sur la figure 7, pour une réconciliation inverse.

Dans un souci de simplification, les éléments et/ou fonctions communs dans les figures 6 et 7 portent les mêmes références.

Dans ce schéma, un code diviseur d'ordre k est utilisé, où k est un nombre entier positif, supérieur ou égal à deux, qui divise la longueur n de la séquence binaire Y : n=m.k.

Le code correcteur linéaire utilisé est de longueur m et de rendement r' tel que : $\frac{r'}{k} = r = \beta_e$. IAB (où

$IAB = \frac{1}{2} \log_2 [1 + s]$ ), s étant le rapport signal sur bruit estimé. La matrice de parité H' du code $C_{m,r'}$ est de dimensions m.(1-r')m. Le syndrome résultant $S_{r'}$ est de longueur m(1-r') bits.

L'utilisation d'un code diviseur selon l'invention modifie les étapes de codage et de décodage par rapport au schéma précédent de la figure 6.

Le codage 100.3b' par Bob comprend les étapes suivantes :

A l'étape 100.3b'1, Bob réalise les opérations suivantes :

- il découpe sa séquence binaire Y de longueur n en m sous-séquences Y(j) de longueur k, j=1 à m.

La première sous-séquence Y(1)=(Y_1,....Y_k) est formée des k premiers bits de la séquence Y, la deuxième sous-séquence Y(2)=(Y_{k+1},....Y_{2k}), des k bits suivants de la séquence Y,...la m-ième sous-séquence Y(m)=(Y_{(m-1)k+1},....Y_{mk}), des k derniers bits de la séquence Y. Chacun des bits de ces séquences représente le signe de la donnée correspondante mesurée par Bob.

- pour chacune de ces sous-séquences Y(j):

a)-il fait correspondre un bit de code $\hat{Y}_j$, égal au bit de signe de l'une des k données correspondantes. Il obtient ainsi une séquence binaire réduite $\hat{Y}$ comprenant m bits : $\hat{Y}=\hat{Y}_1,... \hat{Y}_m$. Dans l'exemple, le bit de code est le bit de signe de la première donnée de chaque séquence : $\hat{Y}_j= Y_{(j-1)k+1}$, j=1 à m.
b)-il forme une séquence binaire d'information supplémentaire G(j), en faisant une addition modulo 2 de chacun des bits de la sous-séquence Y(j), avec le bit $\hat{Y}_j$ associé, (ou par son complémentaire) : $G(j)=(Y_{(j-1)k+1} \oplus \hat{Y}_j,....Y_{jk} \oplus \hat{Y}_j)$.
c)-il calcule le syndrome $s_r'$ de la séquence binaire réduite $\hat{Y}$ : $s_r'=H'. \hat{Y}$. Ce syndrome a une longueur m(1-r')bits.

Le décodage 100.3d' par Alice comprend les étapes suivantes :

- A l'étape 100.3d'l, Alice découpe sa chaine x de longueur n en m sous-séquences x(j) de longueur k, j=1 à m : x(j)=(x$_{(j-1)k}$...x$_{jk}$).
- A l'étape 1.00.3d'2, Alice reçoit de Bob :

  - les n valeurs absolues |y$_i$|$_{i=1 à n}$.
  - les m séquence binaires d'information G(j),j=1 à m.
  - le syndrôme s$_r$'.

La séquence binaire d'information G(j) informe Alice que la sous-séquence Y(j) est égale à la séquence G(j) ou à la séquence complémentaire $\overline{G}$(j). Alice calcule la log-vraisemblance L$_j$ correspondante. Pour cela, elle calcule la distance euclidienne entre le mot x(j) envoyé par Alice, et chacune des séquences G(j) et $\overline{G}$ (j). Notons d$_{j1}$ et d$_{j2}$, ces deux distances. La vraisemblance est égale à exp(d$_{j1}$)/exp(d$_{j2}$), et la log-vraisemblance L$_j$, au logarithme de cette vraisemblance.

Pour chaque mot x(j), j=1 à m, Alice calcule ainsi ces deux distances d$_{j1}$ et d$_{j2}$, puis la log-vraisemblance correspondante L$_j$. Le décodage itératif du code C$_{m,r'}$ est alors réalisé, utilisant les log-vraisemblances L$_j$, les valeurs absolues |y$_i$|$_{i=1 à n}$, et le syndrome s'$_r$. On obtient en sortie une séquence Y'$_{out}$, de m bits, qui doit correspondre à la séquence $\hat{Y}$.

De préférence, et comme précédemment, un code binaire cyclique BCH est utilisé, pour corriger les quelques erreurs éventuelles restantes dans Y'$_{out}$. Le codage 100.3e' prend en entrée la séquence réduite $\hat{Y}$, et fournit le syndrome correspondant : s'$_{BCH}$=H'$_{BCH}$.$\hat{Y}$ à Alice. Alice réalise le décodage 100.3f en utilisant Y'$_{out}$ et s'$_{BCH}$. On obtient en sortie $\hat{Y}$.

Illustrons ce schéma de codage/décodage par un exemple numérique.

Supposons que dans une instance du procédé, on ait besoin d'un code de rendement 0.02. Suppose que l'on connaisse un bon code LPDC C de rendement 0.1. Selon l'invention, on concatène un code C de rendement 0,1 avec un code diviseur de longueur k=5. On suppose ici que n est un multiple de 5 : a n=5m.

On utilise le code C de longueur m et de rendement r'=0,1, noté C$_{m,r'}$. Chaque bit de ce code correspond en fait à k=5 bits physiques, c'est-à-dire les données d'Alice.

Alice regroupe alors ses données en m paquets de longueur k=5. Pour chaque paquet, elle calcule la vraisemblance du bit du code C$_{m,r'}$ correspondant. Prenons un exemple pratique. Par commodité, on prend A=√2, en sorte que les coordonnées x$_i$ sont égales à -1 ou +1.

Les cinq premières données de la séquence x d'Alice sont : x$_1$=1; x$_2$=1 x$_3$=-1 ; x$_4$=-1, . x$_5$=-1. Les cinq premières données mesurées correspondantes, dans la séquence y de Bob, sont : y$_1$=1,7 ; y$_2$=-0.9 ; y$_3$=-0.5 ; y$_4$=-1.3 ; y$_5$=-0.1.

Les valeurs binaires correspondantes sont (étape 100.3a - figure 7) : Y$_1$=1 ; Y$_2$=0 ;Y$_3$=0 Y$_4$=0 ; Y$_5$=0, qui correspondent aux signes des données mesurées.

Ces valeurs forment le premier vecteur Y(1)= Y$_1$Y$_2$Y$_3$Y$_4$ Y$_5$=10000 de longueur k=5, formé dans la séquence Y de n bits.

Bob code ce mot Y(1)=(10000) par le bit de code $\hat{Y}_1$=$\hat{Y}_1$=1.

Pour faire deviner à Alice la valeur de $\hat{Y}_1$, Bob lui transmet les valeurs absolues des valeurs de mesure |y$_1$|=1,7 ; |y$_2$|=0,9 ; |y$_3$|=0,5 ; |y$_4$|=1,3 ; |y$_5$|=0,1, correspondant au mot Y(1) et le mot d'information G(1)= Y(1)⊕$\hat{Y}_1$, où ⊕ correspond à l'addition modulo 2. Dans l'exemple, G(1)=(011111), c'est-à-dire les signes des données mesurées, sauf le signe de la première donnée.

Ce mot G(1) informe Alice que soit Y(1)=Y$_1$Y$_2$Y$_3$Y$_4$ Y$_5$= 01111 ce qui correspond à $\hat{Y}_1$=1 soit Y(1)=10000 ce qui correspond à $\hat{Y}_1$=0.

Pour calculer la vraisemblance de chaque éventualité, à savoir $\hat{Y}_1$=1 ou $\hat{Y}_1$=0, Alice calcule la distance euclidienne entre le mot x(1)= et chacun des deux mots possibles de Bob correspondant à G(1) ou $\overline{G}$ (1).

Rappelons que Y(1)=01111 signifie que le signe de : y$_1$ y$_2$ y$_3$ y$_4$y$_5$ est respectivement - + + + +, alors que Y(1)=10000 signifie que le signe de : y$_1$ y$_2$ y$_3$ y$_4$y$_5$ est respectivement + - - - .

Ainsi :

a). La distance euclidienne entre x(1) et G(1) est égale à :

$$\text{Dist}(x(1),\ G(1))^2 = \text{Dist}(x_1x_2x_3x_4x_5,\ 01111)^2 = \text{Dist}(\{1;\ 1;\ -1;\ -1;\ -1\},\ \{-1,7;\ 0,9; 0,5;\ 1,3;\ 0,1\})^2 = (1+1,7)^2 + (1-0,9)^2 + (-1-0,5)^2 + (-1-1,3)^2 + (-1-0,1)^2 = 2,7^2 + 0,1^2 + 1,5^2 + 2,3^2 + 1,1^2 = 16,05$$

b). La distance euclidienne entre x(1) et $\overline{G}$ (1) est égale à :

$$\mathrm{Dist}(x(1), \overline{G}(1))^2 = \mathrm{Dist}(x_1x_2x_3x_4x_5, 10000)^2 = \mathrm{Dist}(\{1, 1, -1, -1, -1\}, \{1,7,-0,9,-0,5,-1,3,-0,1\})^2 = (1-1,7)^2 + (1+0,9)^2 + (-1+0,5)^2 + (-1+1,3)^2 + (-1+0,1)^2 = 0,7^2 + 1,9^2 + 0,5^2 + 0,3^2 + 0,9^2 = 5,25.$$

On voit que la distance euclidienne est plus petite pour le mot G(1)=10000 donc le bit $\hat{Y}_1$=1 est le plus probable.

Ainsi, pour chaque j=1 à m, et pour chaque bloc x(j) de k bits, l'étape de décodage 100.3d' consiste pour Alice les deux distances euclidiennes en prenant les valeurs absolues correspondantes et le mot d'information G(j), puis la log-vraisemblance $L_j$. Ensuite des moyens de décodage du code $C_{m,r'}$ déroulent un algorithme à partir duquel la séquence réduite $\hat{Y}$ doit être retrouvée, par utilisation des log-vraisemblances et du syndrome $s'_r$. On obtient en sortie une séquence $Y'_{out}$ de m bits qui doit correspondre à $\hat{Y}$.

Le schéma de réconciliation qui vient d'être décrit, à code correcteur d'erreur linéaire de longueur m et de rendement k, combiné à un code diviseur d'ordre k où k=n/m, permet d'atteindre un rendement total égal à r=r'/k correspondant aux conditions expérimentales.

Ce schéma a été expliqué pour une réconciliation inverse. Il pourrait aussi être mis en oeuvre dans un schéma de réconciliation directe, selon le même principe précédemment expliqué, en construisant le code diviseur de manière similaire, pour former une séquence binaire réduite, et en calculant les mots d'informations supplémentaires pour calculer la log-vraisemblance attachée à chacun des bits de la séquence binaire réduite ainsi formée. La seule différence est que Bob connait les valeurs absolues des données mesurées.

## Revendications

1. Procédé de distribution quantique d'une clé à variables continues, comprenant une phase d'échange quantique (100.1) entre un émetteur Alice et un récepteur Bob, dans laquelle l'émetteur Alice émet aléatoirement N états cohérents quantiques, chaque état étant formé par une modulation discrète aléatoire de la phase ($\phi_i$) d'un état quantique cohérent d'amplitude donnée (A), par sélection aléatoire d'une valeur de phase parmi un nombre fini de valeurs possibles ($\phi_1$, $\phi_2$, $\phi_3$, $\phi_4$), et le récepteur Bob mesure pour chaque état reçu, une quadrature choisie aléatoirement, au moyen d'une détection interférométrique, et révèle à l'émetteur la base de mesure ($B_i$) correspondante, permettant à l'émetteur d'établir une chaîne ($x_e$) de N données de quadrature émises, correspondant à la chaîne ($y_r$) des N données de quadrature mesurées par le récepteur, et une phase de réconciliation de données (100.3) basée sur lesdites chaînes de données émises et mesurées, procédé dans lequel l'amplitude desdits états quantiques émis dans la phase d'échange quantique est fixée par une valeur de variance (VA) choisie pour imposer un domaine de travail dans lequel la capacité de canal est indépendante de ladite modulation appliquée, et égale l'information de Shannon pour un canal gaussien, procédé dans lequel ladite étape de réconciliation est réalisée sans étape préalable de seuillage, ou de post sélection, desdites données de quadrature émises ou reçues, en utilisant un code linéaire de correction d'erreur binaire dont le rendement correspond à un rapport signal sur bruit estimé pour ladite phase d'échange quantique pour fournir en sortie une séquence binaire de longueur n, procédé dans lequel une phase d'amplification de secret (100.4) fournit une clé secrète à partir de ladite séquence binaire, de longueur réduite à un nombre égal à un taux d'extraction de clé secrète ($\Delta I^{secret}$) calculé à partir d'équations établies pour un canal gaussien.

2. Procédé selon la revendication 1, **caractérisé en ce que** lesdites valeurs de phase possibles($\phi_1$, $\phi_2$, $\phi_3$, $\phi_4$) sont : $\pi/4$, $3\pi/4$, $5\pi/4$, $7\pi/4$.

3. Procédé selon la revendication 1, **caractérisé en ce que** ladite variance (VA) est de l'ordre de 1 à quelques unités de bruit de photon.

4. Procédé selon la revendication 1, **caractérisé en ce que** ladite variance a une valeur choisie telle qu'elle optimise un taux d'extraction de clé secrète pour un taux de transmission (T) et un excès de bruit ($\varepsilon$) associés aux données émises par Alice et reçues par Bob dans ladite phase d'échange quantique.

5. Procédé selon la revendication 3, **caractérisé en ce que** ledit taux d'extraction de clé secrète est le taux de Holevo.

6. Procédé selon la revendication 1, **caractérisé en ce que** le taux d'efficacité de réconciliation est au moins égal à environ 80%, dans le dit domaine de travail.

7. Procédé selon l'une quelconque des revendications 1 à 6, dans lequel une phase d'estimation des paramètres dudit échange quantique, révèle publiquement N-n données desdites chaînes émise ($x_e$) et mesurée ($y_r$), choisies aléatoirement, pour calculer un rapport signal sur bruit estimé correspondant (s), et choisir un code linéaire correcteur d'erreur binaire, de rendement déterminé r, correspondant au dit rapport signal sur bruit estimé.

8. Procédé selon la revendication 7, dans lequel la longueur dudit code linéaire est égale à n, et son rendement r est supérieur ou égal à une valeur autour de 0,1.

9. Procédé selon la revendication 7, **caractérisé en ce que** le rendement r est inférieur ou égal à une valeur autour de 0,1, ledit code linéaire correcteur d'erreur binaire de rendement r est construit au moyen d'un code linéaire de correction d'erreur binaire de rendement r' égal à r.k, k entier supérieur ou égal à 2, diviseur de n, et de longueur m égal à n/k, combiné à un code diviseur d'ordre k, basé sur une division des séquences binaires de longueur n à réconcilier, en m groupes de longueur k, de manière à maximiser les distances de Hamming.

10. Procédé selon la revendication 9, comprenant une phase de codage par une première partie (Bob), respectivement Alice, ou Bob, d'une première chaîne (y) formée par les n données non révélées restantes de ladite première partie, ladite phase de codage comprenant le calcul d'un syndrome ($s'_r$) correspondant au dit code de correction d'erreur binaire ($C_{m,r'}$) appliqué à une séquence binaire issue de ladite première chaîne et une phase de décodage dudit syndrome par une deuxième partie, respectivement Bob ou Alice, pour retrouver ladite séquence binaire, **caractérisé en ce que** ladite séquence binaire est une séquence binaire réduite ($\hat{Y}$) de longueur m, construite par utilisation dudit code diviseur d'ordre k, en divisant ladite première chaîne de longueur n (y), en m blocs de k données, tel que ladite séquence binaire réduite ($\hat{Y}$) est formée de m bits de code ($\hat{Y}_j$), chacun des m bits de code correspondant à un bloc différent de k données de ladite première chaine (y), et correspondant à un bit de signe d'une donnée parmi lesdites k données.

11. Procédé selon la revendication 10, **caractérisé en ce que** ladite première partie fournit à la seconde partie, respectivement Bob, ou Alice, ledit syndrome ($s'_r$) du code correcteur d'erreur binaire ($C_{m,r'}$) pour ladite séquence binaire réduite ($\hat{Y}$), et pour chacun des m blocs de longueur k, une séquence binaire d'information (G(j)) correspondant à l'addition modulo deux d'une séquence binaire (Y(j)) formée par les k bits de signe des données du bloc considéré, avec le bit de code ($\hat{Y}_j$) dudit bloc.

12. Procédé selon la revendication 11, **caractérisé en ce que** la seconde partie:

   - divise sa chaine de données de longueur n, en m blocs (x(j)) de longueur k, en correspondance avec la division réalisée par la première partie (Bob),
   - pour chaque bloc de données obtenu (x(j)), calcule une log-vraisemblance associée à la séquence binaire d'information correspondante (G(j)) transmise par la première partie, en sorte que l'on obtient m log-vraisemblances ($L_j$), une par bloc ((x(j)),
   - décode ladite séquence binaire réduite sur la base desdites log-vraisemblances et dudit syndrome.

13. Procédé selon l'une quelconque des revendications 1 à 12, **caractérisé en ce que** ladite phase de réconciliation est inverse, où la première partie est Bob, et la seconde Alice.

14. Procédé selon l'une quelconque des revendications précédentes, dans lequel la phase de réconciliation comprend l'utilisation d'un code supplémentaire de correction d'erreur de type BCH.

15. Procédé selon l'une quelconque des revendications précédentes, **caractérisé en ce que** la détection interférométrique est homodyne.

**Patentansprüche**

1. Verfahren zur Quantenverteilung eines Schlüssels mit kontinuierlichen Variablen, umfassend eine Quantenaustauschphase (100.1) zwischen einem Sender Alice und einem Empfänger Bob, wobei der Sender Alice auf Zufallsbasis N kohärente Quantenzustände sendet, wobei jeder Zustand durch eine zufällige diskrete Modulation der Phase ($\phi_i$) eines kohärenten Quantenzustands mit gegebener Amplitude (A), durch zufälliges Auswählen eines Phasenwertes aus einer finiten Anzahl von möglichen Werten ($\phi_1$, $\phi_2$, $\phi_3$, $\phi_4$) gebildet wird, und der Empfänger Bob misst für jeden empfangenen Zustand eine zufällig gewählte Quadratur mittels einer interferometrischen Erkennung und zeigt die entsprechende Messbasis ($B_i$) dem Sender an, so dass der Sender eine Kette ($x_e$) von N gesendeten Quadraturdaten erstellen kann, entsprechend der Kette ($y_r$) der von dem Empfänger gemessenen N Quadraturdaten, und eine Datenabgleichphase (100.3) auf der Basis der gesendeten und gemessenen Datenketten, wobei in dem Verfahren die Amplitude der in der Quantenaustauschphase gesendeten Quantenzustände durch einen Varianzwert ($V_A$) festgelegt wird, der zum Erzwingen einer Arbeitsdomäne gewählt wird, wobei in dem Verfahren die Kanalkapazität unabhängig von der angewandten Modulation und gleich der Shannon-Information für einen Gaußschen Kanal ist, wobei der Abgleichschritt ohne vorherigen Schwellenwertbildungs- oder Nachauswahlschritt an den gesendeten oder empfangenen Quadraturdaten unter Nutzung eines linearen Bitfehlerkorrekturcode ausgeführt wird, dessen Ertrag einem geschätzten Signal-Rausch-Verhältnis für die Quantenaustauschphase entspricht, um am Ausgang eine Bitsequenz mit einer Länge n bereitzustellen, wobei eine Geheimnisverstärkungsphase (100.4) einen Geheimschlüssel auf der Basis der Bitsequenz mit einer auf eine Zahl reduzierten Länge ergibt, die gleich einer Geheimschlüsselextraktionsrate ($\Delta I^{geheim}$) ist, errechnet auf der Basis von durch einen gaußschen Kanal aufgestellten Gleichungen.

2. Verfahren nach Anspruch 1, **dadurch gekennzeichnet, dass** die möglichen Phasenwerte ($\phi_1$, $\phi_2$, $\phi_3$, $\phi_4$): $\pi/4$, $3\pi/4$, $5\pi/4$, $7\pi/4$ sind.

3. Verfahren nach Anspruch 1, **dadurch gekennzeichnet, dass** die Varianz ($V_A$) in der Größenordnung von 1 bis zu einigen Photonenrauscheinheiten liegt.

4. Verfahren nach Anspruch 1, **dadurch gekennzeichnet, dass** der Wert der Varianz so gewählt wird, dass sie eine Geheimschlüsselextraktionsrate für eine Senderate (T) und einen Rauschüberschuss (e) in Assoziation mit den Daten optimiert, die in der Quantenaustauschphase von Alice gesendet und von Bob empfangen werden.

5. Verfahren nach Anspruch 3, **dadurch gekennzeichnet, dass** die Geheimschlüsselextraktionsrate die Holevo-Rate ist.

6. Verfahren nach Anspruch 1, **dadurch gekennzeichnet, dass** der Abgleichwirkungsgrad wenigstens gleich etwa 80 % in der Arbeitsdomäne ist.

7. Verfahren nach einem der Ansprüche 1 bis 6, wobei eine Phase des Schätzens der Parameter des Quantenaustauschs öffentlich N-n Daten von zufällig ausgewählten gesendeten ($x_e$) und gemessenen ($y_r$) Ketten zeigt, um ein entsprechendes geschätztes Signal-Rausch-Verhältnis (s) zu berechnen und einen linearen Bitfehlerkorrekturcode auszuwählen, mit ermitteltem Ertrag r, entsprechend dem geschätzten Signal-Rausch-Verhältnis.

8. Verfahren nach Anspruch 7, wobei die Länge des linearen Codes gleich n ist und sein Ertrag r gleich oder größer als ein Wert von etwa 0,1 ist.

9. Verfahren nach Anspruch 7, **dadurch gekennzeichnet, dass** der Ertrag r gleich oder kleiner als ein Wert von etwa 0,1 ist, wobei der lineare Bitfehlerkorrekturcode mit Ertrag r mittels eines linearen Bitfehlerkorrekturcode von Ertrag r' gleich r.k konstruiert ist, wobei k gleich oder größer als 2 ist, Teiler von n, und mit einer Länge m gleich n/k, kombiniert mit einem Teilercode der Größenordnung k auf der Basis einer Unterteilung von abzugleichenden Bitsequenzen von Länge n in m Gruppen von Länge k, um die Hamming-Distanzen zu maximieren.

10. Verfahren nach Anspruch 9, das eine Phase des Codierens, durch einen ersten Teil Bob bzw. Alice oder Bob, einer ersten Kette (y) beinhaltet, die durch die restlichen ungezeigten n Daten des ersten Teils gebildet wird, wobei die Codierungsphase die Berechnung eines Syndroms ($s'_r$) entsprechend dem Bitfehlerkorrekturcode ($C_{m,r'}$), angewendet auf eine von der ersten Kette kommende Bitsequenz, und eine Phase des Decodierens des Syndroms durch einen zweiten Teil, Bob bzw. Alice, zum Finden der Bitsequenz beinhaltet, **dadurch gekennzeichnet, dass** die Bitsequenz eine reduzierte Bitsequenz (Y) mit der Länge m ist, konstruiert mittels des Teilercode der Größenordnung k, durch Unterteilen der ersten Kette mit Länge n (y) in m Blöcke von k Daten, so dass die reduzierte Bitsequenz (Y) durch m Code-Bits ($\hat{Y}_j$) gebildet wird, wobei jedes der m Code-Bits einem anderen Block von k Daten der ersten Kette (y) entspricht und einem Vorzeichenbit eines Datenelements unter den k Daten entspricht.

11. Verfahren nach Anspruch 10, **dadurch gekennzeichnet, dass** der erste Teil dem zweiten Teil, Bob bzw. Alice, das Syndrom ($s'_r$) des Bitfehlerkorrekturcode ($C_{m,r'}$) für die reduzierte Bitsequenz (Y) und, für jeden der m Blöcke mit Länge k, eine Bitsequenz von Informationen (G(j)) entsprechend der Addition modulo zwei einer Bitsequenz (Y(j)) bereitstellt, gebildet durch die k Vorzeichenbits der Daten des betrachteten Blocks, mit dem Code-Bit ($\hat{Y}_j$) des Blocks.

12. Verfahren nach Anspruch 11, **dadurch gekennzeichnet, dass** der zweite Teil:

- seine Datenkette mit Länge n in m Blöcke (x(j)) mit Länge k unterteilt, entsprechend der vom ersten Teil Bob durchgeführten Division;
- für jeden Block von erhaltenen Daten (x(j)) eine Log-Wahrscheinlichkeit in Assoziation mit der entsprechenden Bitsequenz von Informationen (G(j)) berechnet, gesendet vom ersten Teil, so dass m Log-Wahrscheinlichkeiten ($L_j$), eine pro Block (x(j)), erhalten werden;
- die reduzierte Bitsequenz auf der Basis der Log-Wahrscheinlichkeiten und des Syndroms decodiert.

13. Verfahren nach einem der Ansprüche 1 bis 12, **dadurch gekennzeichnet, dass** die Abgleichphase umgekehrt wird, wobei der erste Teil Bob ist und der zweite Teil Alice ist.

14. Verfahren nach einem der vorherigen Ansprüche, wobei die Abgleichphase die Nutzung eines zusätzlichen Fehlerkorrekturcode des BCH-Typs beinhaltet.

15. Verfahren nach einem der vorherigen Ansprüche, **dadurch gekennzeichnet, dass** die interferometrische Detektion homodyn ist.

## Claims

1. A method for the quantum distribution of a key with continuous variables, comprising a quantum exchange phase (100.1) between an emitter Alice and a receiver Bob, wherein said emitter Alice randomly emits N coherent quantum states, each state being formed by a random discrete modulation of the phase ($\phi_i$) of a coherent quantum state of given amplitude (A), by randomly selecting a phase value from a finite number of possible values ($\phi_1$, $\phi_2$, $\phi_3$, $\phi_4$), and said receiver Bob measures, for each received state, a randomly selected quadrature by means of an interferometric detection and reveals the corresponding measurement base ($B_i$) to said emitter, allowing the emitter to establish a chain ($x_e$) of N emitted quadrature data, corresponding to the chain ($y_r$) of the N quadrature data measured by said receiver, and a data reconciliation phase (100.3) based on said emitted and measured data chains, in which method the amplitude of said quantum states emitted in the quantum exchange phase is set by a variance value ($V_A$) selected to impose a work domain, in which the channel capacity is independent of said applied modulation and equals the Shannon information for a Gaussian channel, in which method said step of reconciliation is carried out without a preliminary step of thresholding or of post-selecting, said emitted or received quadrature data using a linear binary error correction code, the yield of which corresponds to a signal-to-noise ratio estimated for said quantum exchange phase so as to provide, at the output, a binary sequence of length n, in which method a secret amplification phase (100.4) provides a secret key on the basis of said binary sequence, the length of which is reduced to a number that is equal to a secret key extraction rate ($\Delta I^{secret}$) computed on the basis of equations established for a Gaussian channel.

2. The method according to claim 1, **characterised in that** said possible phase values ($\phi_1$, $\phi_2$, $\phi_3$, $\phi_4$) are: $\pi/4$, $3\pi/4$, $5\pi/4$, $7\pi/4$.

3. The method according to claim 1, **characterised in that** said variance ($V_A$) is of the order of 1 to several units of photon noise.

4. The method according to claim 1, **characterised in that** the value of said variance is selected so that it optimises a secret key extraction rate for a transmission rate (T) and an excess noise ($\varepsilon$) associated with the data emitted by Alice and received by Bob in said quantum exchange phase.

5. The method according to claim 3, **characterised in that** said secret key extraction rate is the Holevo rate.

6. The method according to claim 1, **characterised in that** the reconciliation efficiency rate is at least equal to approximately 80% in said working domain.

7. The method according to any one of claims 1 to 6, wherein a phase of estimating the parameters of said quantum exchange publicly reveals N-n data of said randomly selected emitted ($x_e$) and measured ($y_r$) chains so as to compute a corresponding estimated signal-to-noise ratio (s) and to select a linear binary error correction code, of determined yield r, corresponding to said estimated signal-to-noise ratio.

8. The method according to claim 7, wherein the length of said linear code is equal to n and its yield r is greater than or equal to a value of approximately 0.1.

9. The method according to claim 7, **characterised in that** the yield r is less than or equal to a value of approximately 0.1, said linear binary error correction code of yield r is constructed by means of a linear binary error correction code of yield r' equal to r.k, with k being greater than or equal to 2, divisor of n, and of length m equal to n/k, combined with a divider code of order k, based on a division of binary sequences of length n to be reconciled into m groups of length k, so as to maximise the Hamming distances.

10. The method according to claim 9, comprising a phase of coding, by a first part Bob, respectively Alice, or Bob, a first chain (y) formed by the remaining unrevealed n data of said first part, said coding phase comprising the computation of a syndrome ($s'_r$) corresponding to said binary error correction code ($C_{m,r'}$) applied to a binary sequence coming from said first chain and a phase of decoding said syndrome, by a second part, respectively Bob, or Alice, so as to find said binary sequence, **characterised in that** said binary sequence is a reduced binary sequence (Y) of length m, constructed using said divider code of order k, by dividing said first chain of length n (y) into m blocks of k data, such that said reduced binary sequence (Y) is formed by m code bits ($\hat{Y}_j$), each of said m code bits corresponding to a different block of k data of said first chain (y) and corresponding to a sign bit of one item of data among said k data.

11. The method according to claim 10, **characterised in that** said first part provides the second part, respectively Bob, or Alice, with said syndrome ($s'_r$) of the binary error correction code ($C_{m,r'}$) for said reduced binary sequence (Y) and, for each of the m blocks of length k, with a binary sequence of information (G(j)) corresponding to the addition modulo two of a binary sequence (Y(j)) formed by the k sign bits of the data of the considered block, with the code bit ($\hat{Y}_j$) of said block.

12. The method according to claim 11, **characterised in that** said second part:

    - divides its data chain of length n into m blocks (x(j)) of length k, matching the division carried out by said first part Bob;
    - computes, for each block of data obtained (x(j)), a log-likelihood associated with the corresponding binary sequence of information (G(j)) transmitted by said first part, so that m log-likelihoods ($L_j$) are obtained, one per block (x(j));
    - decodes said reduced binary sequence on the basis of said log-likelihoods and of said syndrome.

13. The method according to any one of claims 1 to 12, **characterised in that** said reconciliation phase is reversed, where said first part is Bob and said second part is Alice.

14. The method according to any one of the preceding claims, wherein the reconciliation phase comprises the use of an additional error correction code of the BCH type.

15. The method according to any one of the preceding claims, **characterised in that** the interferometric detection is homodyne.

FIG.1a

FIG.1b

EP 2 297 896 B1

FIG.2a

$\alpha = A / \sqrt{2}$

FIG.2b

FIG.3

$\Delta I^{\text{secret}}$ (nb bits de clé/seconde)

(T, ε) donnés

$VA$

$VA_{\text{opt}}$

FIG.4

Alice

Bob

$\{(A,\phi_1),\ (A,\ \phi_i),.....(A,\ \phi_N)\}$

$\{(y_1,B_1),.....(y_N,B_N)\}$, pour i=1 à N, $B_i$ =P ou Q

$(p_i,\ q_i)=f(A,\phi_i),\ i=1$ à N

100.1a

100.1

100.1b

Pour i=1 à N, $x_i= p_i$ si $B_i$=P ou $q_i$ si $B_i$=Q.

i=1 à N, $B_i$=P ou Q

**Phase 100.1 Echange Quantique**

$x_e=(x_1, ....x_N)$

$y_r=(y_1, ....y_N)$

**Phase 100.2 Estimation de paramètres**

Tirage aléatoire de (N-n) valeurs d'index j pointant sur les chaînes x et y ⌐100.2a

(N-n) valeurs $x_j$ → Estimation de SNR, $I_{AB}$, $I_{BE}$, $\chi_{BE}$ ← (N-n) valeurs $y_j$

Choix d'un code C en fonction du SNR
Calcul de β, $\Delta I^{\ secret}$
100.2b

$x=(x_1, ....x_n)$

$y=(y_1, ....y_n)$

**Phase 100.3 Réconciliation**

Correction linéaire d'erreur binaire (C) ⌐100.3

**Phase 100.4 Amplification de confidentialité**

100.4

Hachage

Clé secrète K de longueur $\Delta I^{\ secret}$

FIG.5

$y=(y_1, \ldots y_i, \ldots y_n)$

Pour i=1 à n
$Y_i=0$ si $y_1 \le 0$, $Y_i=1$ sinon — 100.3a

$Y=(Y_1, \ldots Y_i, \ldots Y_n)$

$|y_i|$, i=1 à n — 100.3c

$C_{n,r}$
$s_r=H.Y$ — 100.3b

$s_{BCH}=H_{BCH} \cdot Y$ — 100.3e

$s_r$

$s_{BCH}$

$x=(x_1, \ldots x_i, \ldots x_n)$

$Y_{out}$

$Y=(Y_1, \ldots Y_i, \ldots Y_n)$

100.3d

100.3f

Alice

FIG.6

FIG.7

EP 2 297 896 B1

FIG.8

EP 2 297 896 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1825633 A
- US 20040109564 A
- US 20060083376 A

**Littérature non-brevet citée dans la description**

- **LODEWYCK et al.** Quantum key distribution over 25 km with an all-fiber continuous variables system. *Physical Review,* 2007, vol. A76, 042305
- **LEVERRIER et al.** Multidimensional reconciliation for a continuous-variable quantum key distribution. *Physical Review A,* 2008, vol. 77, 042325
- **MM. HEID ; LÜTKENHAUS.** Security of coherent state quantum cryptography in presence of gaussian noise. *Physical Review A,* Août 2007, vol. 76 (2), 022313
- **NAMIKI et al.** Efficient-phase-encoding protocols for continuous-variable quantum key distribution using coherent states and postselection. *Physical Review A,* 2006, vol. 74, 032302
- multi-edge type LDPC codes. **T.RICHARDSON ; R.URBANKE.** Workshop honoring Prof. Bob McEliece on his 60th birthday. Califomia Institute of Technology, Mai 2002, 24-25